# EUROPEAN PATENT SPECIFICATION

(11) **EP 4 509 551 B1**
(45) Date of publication and mention of the grant of the patent: **12.08.2026**
(21) Application number: 23791924.6
(22) Date of filing: 20.04.2023
(51) Int. Cl.: C08G 77/60, C09K 3/18, G02B 1/14, G02B 1/18

(54) **SURFACE TREATMENT AGENT**
OBERFLÄCHENBEHANDLUNGSMITTEL
AGENT DE TRAITEMENT DE SURFACE

(30) Priority: 20.04.2022 JP 2022069569
(43) Date of publication of application: 19.02.2025
(73) Proprietor: DAIKIN INDUSTRIES, LTD., Osaka-shi, Osaka 530-0001 (JP)
(72) Inventor: TAKANO, Shinya, Osaka-Shi, Osaka 530-0001 (JP); NOMURA, Takashi, Osaka-Shi, Osaka 530-0001 (JP); OGATA, Akitoshi, Osaka-Shi, Osaka 530-0001 (JP); KUBOTA, Hiroki, Osaka-Shi, Osaka 530-0001 (JP)
(74) Representative: Hoffmann Eitle
(86) International application number: PCT/JP2023/015817
(87) International publication number: WO 2023/204276

(56) References cited:
- WO-A1-2015/142562
- WO-A1-2019/159476
- JP-A- 2003 505 557
- JP-A- 2014 148 657
- JP-A- 2015 014 776
- JP-A- 2015 054 945
- JP-A- 2016 166 298
- JP-A- 2017 031 303
- JP-A- 2021 515 066
- US-A1- 2015 274 895
- NIKOLAEV ET AL: "[Some properties of poly(vinylamine)]", VYSOKOMOLEKUL. SOEDIN., KHIM. SVOISTVA I MODIFIKATSIYA POLIMEROV, SB. STATEI (CHIMICESKIE SVOJSTVA I MODIFIKACIJA POLIMEROV : SBORNIK STATEJ), no. 1964, 1 January 1964 (1964-01-01), pages 146 - 150, XP093292982
- NIKOLAEV A.F.; BONDARENKO ET AL: "Abstract", CHEMICAL ABSTRACT SUMMARY, 1 January 1964 (1964-01-01), pages 146 - 150, XP093293455
- FEDOTOV, N. S ET AL. : "Chemical transformations of ω-chlorosilyl-substituted carboxylic acid chlorides", ZHURNAL OBSHCHEI KHIMII [RUSSIAN JOURNAL OF ORGANIC CHEMISTRY], NAUKA, RU, vol. 39, no. 9, 1 January 1969 (1969-01-01), RU , pages 2011 - 2016, XP009550126, ISSN: 0044-460X

## Description

### Technical Field

The present invention relates to a surface-treating agent.

### Background Art

Certain types of silane compounds are known to be capable of providing excellent water- and oil-repellency, when used in surface treatment of a substrate (JP-A-2002-97192).

US-A-2015/274895 discloses a surface treatment agent comprising an organic silicon compound having (i) a specified functional group bonded to silicon atoms directly or via functional groups with a valency of (n+1), where wherein n ≥ 1; and (ii) at least one structure in the molecule in which the silicon atoms are bonded to a siloxane unit represented by R¹₃SiO_{1/2}, R¹₂SiO_{2/2}, R¹SiO_{3/2}, or SiO_{4/2}-, wherein R¹ is a monovalent hydrocarbon group, H, OH, halogen, alkoxy, or a functional group selected from the above specified functional groups bonded to silicon atoms via a functional group with a valency of (n+1).

### Summary of Invention

### Technical Problem

Although the silane compound described in JP-A-2002-97192 can provide a surface-treating layer with excellent water- and oil-repellency, there is a need for a compound that can provide a surface-treating layer with higher friction durability.

An object of the present invention is to provide a silane compound capable of forming a surface-treating layer with excellent friction durability.

### Solution to Problem

The present invention provides a compound (also referred to as "the present compound" or "the present silane compound" hereinafter), which is a silane compound of formula (1):

R¹-R^{S}-Si(R²)₂-X^{A}-R^{H} (1)

wherein, each independently at each occurrence,
- R^{S}: is a group of the formula: 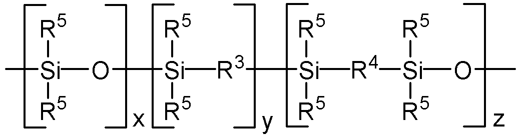
R³ is C₁₋₁₂-alkylene, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
R⁴ is each independently a C₁₋₁₂ alkylene group, -R⁶-OR⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
R⁶ is C₁₋₆-alkylene,
R⁷ is optionally substituted arylene,
R⁸ is a single bond or C₁₋₆-alkylene,
R⁹ is a single bond or -O-,
R⁵ is a hydrocarbon group,
x is an integer of 0-200,
y is an integer of 0-200,
z is an integer of 0-200, wherein (y+z) is ≥ 1, and the order of the repeating units in parentheses provided with x, y, or z is not limited,
- R¹: is a hydrocarbon group,
- R²: is a hydrocarbon group,
- R^{H}: is a group of any of the formulae (S1) and (S3)-(S5): 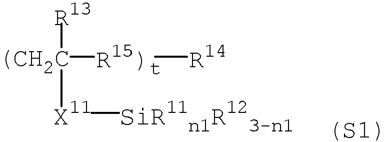
wherein, each independently
   R¹¹ is OH or a hydrolyzable group,
   R¹² is a monovalent organic group,
   n1 is an integer of 0-3 for each (SiR¹¹ₙ₁R¹²₃₋ₙ₁) unit,
   X¹¹ is a single bond or a divalent organic group,
   R¹³ is H or a monovalent organic group,
   t is each independently an integer of ≥ 2,
   R¹⁴ is H, halogen, or -X¹¹-SiR¹¹ₙ₁R¹²₃₋ₙ₁,
   R¹⁵ is a single bond, -O-, C₁₋₆-alkylene or C₁₋₆-alkyleneoxy,

   -SiR^{a1}ₖ₁R^{b1}ₗ₁R^{c1}ₘ₁ (S3)
wherein, each independently,
   R^{a1} is -Z¹-SiR²¹ₚ₁R²²_{q1}R²³ᵣ₁,
   Z¹ is a divalent organic group,
   R²¹ is -Z^{1'}-SiR^{21'}_{p1'}R^{22'}_{q1'}R^{23'}_{r1'},
   Z^{1'} is a divalent organic group,
   R^{21'} is -Z^{1"}-SiR^{22"}_{q1"}R^{23"}_{r1"},
   Z^{1"} is a divalent organic group,
   R^{22"} is OH or a hydrolyzable group,
   R^{23"} is a monovalent organic group,
   q1" is an integer of 0-3,
   r1" is an integer of 0-3,
   R^{22'} is OH or a hydrolyzable group,
   R^{23'} is a monovalent organic group,
   p1' is an integer of 0-3,
   q1' is an integer of 0-3,
   r1' is an integer of 0-3,
   R²² is OH or a hydrolyzable group,
   R²³ is a monovalent organic group,
   p1 is an integer of 0-3,
   q1 is an integer of 0-3,
   r1 is an integer of 0-3,
   R^{b1} is OH or a hydrolyzable group,
   R^{c1} is a monovalent organic group,
   k1 is an integer of 0-3,
   l1 is an integer of 0-3,
   m1 is an integer of 0-3,

   -CR^{d1}ₖ₂R^{e1}ₗ₂R^{cf}ₘ₂ (S4)
wherein, each independently,
   R^{d1} is -Z²-CR³¹ₚ₂R³²_{q2}R³³ᵣ₂,
   Z² is a single bond, -O-, or a divalent organic group,
   R³¹ is -Z^{2'}-CR^{32'}_{q2'}R^{33'}_{r2'},
   Z^{2'} is a single bond, -O-, or a divalent organic group,
   R^{32'} is -Z³-SiR³⁴ₙ₂R³⁵₃₋ₙ₂,
   Z³ is a single bond, -O-, or a divalent organic group,
   R³⁴ is OH or a hydrolyzable group,
   R³⁵ is a monovalent organic group,
   n2 is an integer of 0-3,
   R^{33'} is H, OH, or a monovalent organic group,
   q2 ' is an integer of 0-3,
   r2' is an integer of 0-3,
   R³² is -Z³-SiR³⁴ₙ₂R³⁵₃₋ₙ₂,
   R³³ is H, OH, or a monovalent organic group,
   p2 is an integer of 0-3,
   q2 is an integer of 0-3,
   r2 is an integer of 0-3,
   R^{e1} is -Z³-SiR³⁴ₙ₂R³⁵₃₋ₙ₂,
   R^{f1} is H, OH, or a monovalent organic group,
   k2 is an integer of 0-3,
   l2 is an integer of 0-3,
   m2 is an integer of 0-3,

   -NR^{g1}R^{h1} (S5)
wherein R^{g1} and R^{h1} each independently are -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
Z⁴ is a single bond, -O-, or a divalent organic group, provided that in each of the formulae (S3), (S4) and (S5) at least two Si atoms to which OH or a hydrolyzable group is bonded are present;
- X^{A}: is a divalent group of the formula:

-(R⁵¹)ₚ₅-(X⁵¹)_{q5}-
wherein, each independently,
   R⁵¹ is -(CH₂)ₛ₅-, or o-, m-, or p-phenylene,
   s5 is an integer of 1-20,
   X⁵¹ is -(X⁵²)ₗ₅-,
   X⁵² is a group selected from -O-, -S-, o-, m-, or p-phenylene, -CO-, -C(O)O-, -CONR⁵⁴-, -O-CONR⁵⁴-, -NR⁵⁴-, and -(CH₂)ₙ₅-,
   R⁵⁴ is H or a monovalent organic group,
   n5 is an integer of 1-20,
   l5 is an integer of 1-10,
   p5 is 0 or 1, and
   q5 is 0 or 1,
where at least one of p5 and q5 is 1, and the order of the repeating units in parentheses provided with p5 or q5 is not limited.

Also, the present invention provides a surface-treating agent (also referred to as "the present surface treating agent" herein) comprising the present compound and optionally a compound composed of a condensed product in which at least a portion of the present compound is condensed.

Furthermore, the present invention provides the use of the present surface-treating agent for vacuum deposition or for wet coating.

Yet further, the present invention provides a pellet comprising the present surface-treating agent.

Even further, the present invention provides an article (also referred to as "the present article" herein) comprising a substrate and, on the substrate, a layer formed of the present compound or the present surface-treating agent.

### Advantageous Effect of Invention

According to the present invention, there can be provided a silane compound capable of forming a surface-treating layer with excellent friction durability.

### Description of Embodiments

The term "monovalent organic group" as used herein refers to a carbon-containing monovalent group. The monovalent organic group is not limited, and may be a hydrocarbon group or a derivative thereof. The derivative of a hydrocarbon group refers to a group that has one or more of e.g. N, O, S, Si, amide, sulfonyl, siloxane, carbonyl, and carbonyloxy at an end or in the molecular chain of the hydrocarbon group. The simple term "organic group" refers to a monovalent organic group. The term "divalent organic group" refers to a carbon-containing divalent group. The divalent organic group may be, for example, a divalent group obtained by further removing one hydrogen atom from an organic group. Similarly, an organic group having a valence of 3 or more refers to a group obtained by removing a predetermined number of hydrogen atoms from an organic group.

As used herein, the "hydrocarbon group" refers to a group containing carbon and hydrogen and a group in which a hydrogen atom is removed from the hydrocarbon. Such a hydrocarbon group is not limited, but examples thereof include C₁₋₂₀-hydrocarbon groups, such as an aliphatic hydrocarbon group and an aromatic hydrocarbon group. The "aliphatic hydrocarbon group" may be either linear, branched, or cyclic, and may be either saturated or unsaturated. The hydrocarbon group may contain one or more ring structures. The hydrocarbon group may be substituted with one or more substituents.

The substituent of the "hydrocarbon group" as used herein is not limited, and examples thereof include a halogen atom; and one or more groups selected from C₁₋₆-alkyl, a C₂₋₆-alkenyl, C₂₋₆ alkynyl, C₃₋₁₀ cycloalkyl, C₃₋₁₀ unsaturated cycloalkyl, 5- to 10-membered heterocyclyl, 5- to 10-membered unsaturated heterocyclyl, C₆₋₁₀-aryl, and 5- to 10-membered heteroaryl, each of which is optionally substituted with one or more halogen atoms.

The term "hydrolyzable group", as used herein, refers to a group that can undergo a hydrolysis reaction, namely, refers to a group that can be removed from the main backbone of the compound by a hydrolysis reaction. Examples of the hydrolyzable group include -OR^{h}, -OCOR^{h}, -O-N=CR^{h}₂, -NR^{h}₂, - NHR^{h}, -NCO, and a halogen (in these formulae, R^{h} is optionally substituted C₁₋₄-alkyl), and -OR^{h} (that is, alkoxy) is preferred. Examples of R^{h} include unsubstituted alkyl such as methyl, ethyl, propyl, isopropyl, n-butyl, and isobutyl; and substituted alkyl such as chloromethyl. Among such groups, alkyl, in particular unsubstituted alkyl, is preferred, and methyl or ethyl is more preferred.

As used herein, the term "arylene group" refers to a divalent aromatic group. The arylene group may be a monocyclic aromatic group or may be a polycyclic aromatic group, and is, for example, a divalent mono- to tricyclic aromatic group, and specific examples thereof include the divalent groups as described below, obtained by removing two hydrogen atoms from benzene, naphthalene, anthracene, fluorene, and phenanthrene. The arylene group may be substituted with one or more substituents. The bond position is arbitrary.

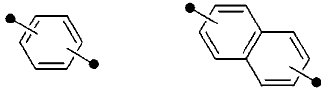

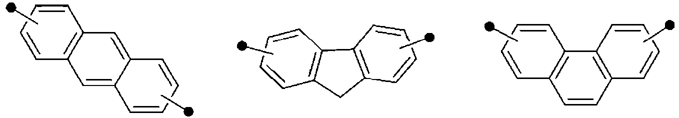

The present compound is a silane compound of the formula R¹-R^{S}-Si(R²)₂-X^{A}-R^{H} (1) as defined above and explained in further detail below.

The Si-O bond is highly ionic and generally has low chemical stability. In the present compound, the Si-O bond is replaced by a Si-C bond or a C-C bond, which can lower the ionic bonding property and improve the chemical stability.

In formula (1), R^{S} is a group of the formula: 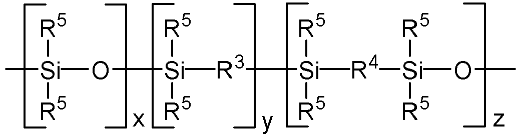
- R³: is C₁₋₁₂-alkylene, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
- R⁴: is each independently a C₁₋₁₂ alkylene group, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
R⁶ is C₁₋₆-alkylene,
R⁷ is optionally substituted arylene,
R⁸ is a single bond or C₁₋₆-alkylene,
R⁹ is a single bond or -O-,
- R⁵: is a hydrocarbon group,
- x: is an integer of 0-200,
- y: is an integer of 0-200,
- z: is an integer of 0-200,
wherein (y+z) is ≥ 1, and the order of the repeating units in parentheses provided with x, y, or z is not limited.

R³ is each independently C₁₋₁₂-alkylene, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-, preferably C₁₋₁₂-alkylene or -R⁶-O-R⁶-.

R⁴ is each independently C₁₋₁₂-alkylene, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-.

In one embodiment, R⁴ is each independently C₁₋₁₂-alkylene or -R⁶-O-R⁶-.

In another embodiment, R⁴ is each independently -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-.

In one embodiment, R³ is each independently C₁₋₁₂-alkylene or -R⁶-O-R⁶-, and R⁴ is each independently C₁₋₁₂-alkylene or -R⁶-O-R⁶-.

In another embodiment, R³ is each independently C₁₋₁₂-alkylene group or -R⁶-O-R⁶-, and R⁴ is each independently - R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-.

The C₁₋₁₂-alkylene group may be linear or may be branched, and is preferably linear.

The C₁₋₁₂-alkylene is preferably C₂₋₈-alkylene, and more preferably C₂₋₆-alkylene.

R⁶ is each independently C₁₋₆-alkylene. It may be linear or may be branched, and is preferably linear.

The C₁₋₆-alkylene is preferably C₂₋₄-alkylene, and more preferably C₂₋₃-alkylene.

In a preferred embodiment, in a group containing a plurality of R⁶, all R⁶ are the same group.

R⁷ is each independently an optionally substituted arylene group.

In one embodiment, R⁷ is each independently

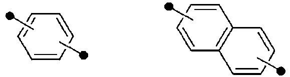

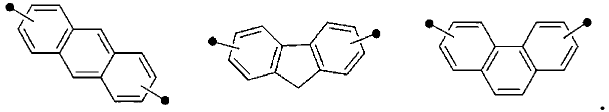

In one embodiment, R⁷ is phenylene.

In another embodiment, R⁷ is naphthylene.

The arylene group may have a substituent. The number of substituents is not limited, and it is, for example, 1-4, preferably 1 or 2.

In one embodiment, the phenylene group and the naphthylene group may have a substituent. The number of substituents is not limited, and it is 1-4, for example, and preferably 1 or 2. As the substituted phenylene group, 2,5-substituted phenylene is preferred.

The substituent with respect to the arylene group is each independently -R⁴¹-R⁴².

R⁴¹ is a single bond, -O- or -S-, preferably a single bond or -O-., and more preferably -O-.

R⁴² is C₁₋₁₂-alkyl group, -(O-R⁴³)ₚ, -R⁴⁴-R⁴⁵, and -R⁴⁴-OR⁴⁶, all of which are optionally substituted with a halogen.

The halogen is iodine, Cl, Br or I, and is preferably F.

The C₁₋₁₂-alkyl in R⁴² may be linear or branched.

R⁴³ is C₁₋₆-alkylene, preferably C₂₋₄-alkylene. Such an alkylene group may be linear or branched.

R⁴⁴ is C₁₋₁₂-alkylene, preferably C₁₋₆-alkylene. Such an alkylene group may be linear or branched.

R⁴⁵ is -CH=CH₂ or -OCOCH=CH₂.

R⁴⁶ is H or C₁₋₆-alkyl. Such an alkyl group may be linear or branched. The C₁₋₆-alkyl is preferably C₁₋₃-alkyl, more preferably C₁₋₂-alkyl, and still more preferably methyl.

R⁸ is each independently a single bond or C₁₋₆alkylene. Such C₁₋₆-alkylene may be linear or branched.

In one embodiment, R⁸ is a single bond.

In another embodiment, R⁸ is C₁₋₆-alkylene.

R⁹ is each independently a single bond or -O-.

In one embodiment, R⁹ is a single bond.

In another embodiment, R⁹ is -O-.

R⁵ is each independently an optionally substituted hydrocarbon group.

R⁵ is, each independently, preferably an unsubstituted hydrocarbon group or a hydrocarbon group substituted with a halogen atom. Such a halogen atom is preferably F.

R⁵ is, each independently, preferably C₁₋₁₈-alkyl or aryl optionally substituted with a halogen atom, and more preferably C₁₋₁₈-alkyl or aryl.

The C₁₋₁₈-alkyl may be linear or may be branched, and is preferably linear. The C₁₋₁₈-alkyl is preferably C₁₋₁₀-alkyl, more preferably C₁₋₆-alkyl, still more preferably C₁₋₄-alkyl, and even more preferably methyl.

The aryl group is preferably phenyl.

In one embodiment, R⁵ is each independently C₁₋₆-alkyl, preferably C₁₋₄-alkyl, and more preferably methyl.

In another embodiment, R⁵ is phenyl.

In another embodiment, R⁵ is each independently methyl or phenyl, preferably methyl.

x is an integer of 0-200, preferably 0-100, more preferably 1-100, still more preferably 5-50, and even more preferably 10-30.

In one embodiment, x is 0.

In one embodiment, x is an integer of 1-200, preferably 1-100, more preferably 5-50, and still more preferably 10-30.

y is an integer of 0-200, preferably 0-100, more preferably 1-100, still more preferably 5-50, and even more preferably 10-30.

In one embodiment, y is 0.

In one embodiment, y is an integer of 1-200, preferably 1-100, more preferably of 5-50, and still more preferably 10-30.

z is an integer of 0-200, preferably 0-100, more preferably 1-100, still more preferably 5-50, and even more preferably 10-30.

In one embodiment, z is 0.

In one embodiment, z is an integer of 1-200, preferably 1-100, more preferably 5-50, and still more preferably 10-30.

R^{S} may be a random polymer or may be a block polymer.

R¹ is a hydrocarbon group.

R² is each independently a hydrocarbon group.

The hydrocarbon group in R¹ and R² is optionally substituted.

R¹ and R² are, each independently, preferably an unsubstituted hydrocarbon group or a hydrocarbon group substituted with a halogen atom. Such a halogen atom is preferably F.

R¹ and R² are, each independently, preferably C₁₋₁₈-alkyl or aryl optionally substituted with a halogen atom, and more preferably C₁₋₁₈-alkyl group or aryl.

The C₁₋₁₈-alkyl may be linear or branched, and is preferably linear. The C₁₋₁₈-alkyl is preferably C₁₋₁₀-alkyl, more preferably C₁₋₆-alkyl, still more preferably C₁₋₄-alkyl, and even more preferably methyl.

The aryl group is preferably phenyl.

In one embodiment, R¹ and R² are each independently C₁₋₆-alkyl, preferably C₁₋₄-alkyl, and more preferably methyl.

In another embodiment, R¹ and R² are phenyl.

In another embodiment, R¹ and R² are each independently methyl or phenyl, preferably methyl.

R^{H} is a group of any of the formulae (S1) and (S3)-(S5): 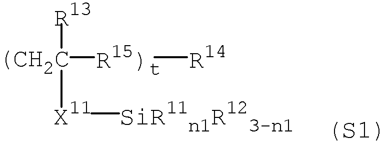
wherein, each independently
   - R¹¹: is OH or a hydrolyzable group,
   - R¹²: is a monovalent organic group,
   - n1: is an integer of 0-3 for each (SiR¹¹ₙ₁R¹²₃₋ₙ₁) unit,
   - X¹¹: is a single bond or a divalent organic group,
   - R¹³: is H or a monovalent organic group,
   - t: is each independently an integer of ≥ 2,
   - R¹⁴: is H, halogen, or -X¹¹-SiR¹¹ₙ₁R¹²₃₋ₙ₁,
   - R¹⁵: is a single bond, -O-, C₁₋₆-alkylene or C₁₋₆-alkyleneoxy,

   -SiR^{a1}ₖ₁R^{b}ₗ₁R^{c1}ₘ₁ (S3)
wherein, each independently,
   - R^{a1}: is -Z¹-SiR²¹ₚ₁R²²_{q1}R²³ᵣ₁,
   Z¹ is a divalent organic group,
   R²¹ is -Z^{1'}-SiR^{21'}_{p1'}R^{22'}_{q1'}R^{23'}_{r1'},
   Z^{1'} is a divalent organic group,
   R^{21'} is -Z^{1"}-SiR^{22"}_{q1"}R^{23"}_{r1"},
   Z^{1"} is a divalent organic group,
   R^{22"} is OH or a hydrolyzable group,
   R^{23"} is a monovalent organic group,
   q1" is an integer of 0-3,
   r1" is an integer of 0-3,
   R^{22'} is OH or a hydrolyzable group,
   R^{23'} is a monovalent organic group,
   p1' is an integer of 0-3,
   q1' is an integer of 0-3,
   r1' is an integer of 0-3,
   R²² is OH or a hydrolyzable group,
   R²³ is a monovalent organic group,
   p1 is an integer of 0-3,
   q1 is an integer of 0-3,
   r1 is an integer of 0-3,
   - R^{b1}: is OH or a hydrolyzable group,
   - R^{c1}: is a monovalent organic group,
   - k1: is an integer of 0-3,
   - l1: is an integer of 0-3,
   - m1: is an integer of 0-3,

   -CR^{d1}ₖ₂R^{e1}ₗ₂R^{cf}ₘ₂ (S4)
wherein, each independently,
   - R^{d1}: is -Z²-CR^{3l}ₚ₂R³²_{q2}R³³ᵣ₂,
   Z² is a single bond, -O-, or a divalent organic group,
   R³¹ is -Z^{2'}-CR^{32'}_{q2'}R^{33'}_{r2'},
   Z^{2'} is a single bond, -O-, or a divalent organic group,
   R^{32'} is -Z³-SiR³⁴ₙ₂R³⁵₃₋ₙ₂,
   Z³ is a single bond, -O-, or a divalent organic group,
   R³⁴ is OH or a hydrolyzable group,
   R³⁵ is a monovalent organic group,
   n2 is an integer of 0-3,
   R^{33'} is H, OH, or a monovalent organic group,
   q2' is an integer of 0-3,
   r2' is an integer of 0-3,
   R³² is -Z³-SiR³⁴ₙ₂R³⁵₃₋ₙ₂,
   R³³ is H, OH, or a monovalent organic group,
   p2 is an integer of 0-3,
   q2 is an integer of 0-3,
   r2 is an integer of 0-3,
   - R^{e1}: is -Z³-SiR³⁴ₙ₂R³⁵₃₋ₙ₂,
   - R^{f1}: is H, OH, or a monovalent organic group,
   - k2: is an integer of 0-3,
   - l2: is an integer of 0-3,
   - m2: is an integer of 0-3,

   -NR^{g1}R^{h1} (S5)
wherein R^{g1} and R^{h1} each independently are -Z⁴-SiR¹¹ₙ₁R¹²₃₋ₙ₁, - Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
Z⁴ is a single bond, -O-, or a divalent organic group,
provided that in each of the formulae (S3), (S4) and (S5) at least two Si atoms to which OH or a hydrolyzable group is bonded are present.

In the above formulae, R¹¹ is each independently OH or a hydrolyzable group.

R¹¹ is preferably, each independently, a hydrolyzable group.

R¹¹ is preferably, each independently, -OR^{h}, -OCOR^{h}, -ON=CR^{h}₂, -NR^{h}₂, -NHR^{h}, -NCO, or a halogen (in these formulae, R^{h} is optionally substituted C₁₋₄-alkyl), and more preferably -OR^{h} (that is, alkoxy). Examples of R^{h} include unsubstituted alkyl such as methyl, ethyl, propyl, isopropyl, n-butyl, and isobutyl; and substituted alkyl such as chloromethyl. Among such groups, alkyl, in particular unsubstituted alkyl, is preferred, and methyl or ethyl is more preferred. In one embodiment, R^{h} is methyl, and in another embodiment, R^{h} is ethyl.

In the above formulae, R¹² is each independently a monovalent organic group. Such a monovalent organic group is a monovalent organic group excluding the hydrolyzable group.

In R¹², the monovalent organic group is preferably C₁₋₂₀-alkyl, more preferably C₁₋₆-alkyl, and still more preferably methyl.

In the above formulae, n1 is each independently an integer of 0-3 for each (SiR¹¹ₙ₁R¹²₃₋ₙ₁) unit. However, in formula (S1), at least two (SiR¹¹ₙ₁R¹²₃₋ₙ₁) units with n1 of 1-3 are present. In other words, in formula (S1), at least two Si atoms to which OH or a hydrolyzable group is bonded are present.

n1 is each independently an integer of preferably 1-3, more preferably 2-3, and still more preferably 3 for each (SiR¹¹ₙ₁R¹²₃₋ₙ₁) unit.

In the above formula, X¹¹ is each independently a single bond or a divalent organic group. Such a divalent organic group is preferably -R²⁸-Oₓ-R²⁹- (wherein R²⁸ and R²⁹ are each independently a single bond or C₁₋₂₀-alkylene, and x is 0 or 1). Such a C₁₋₂₀-alkylene may be linear or branched, and is preferably linear. Such C₁₋₂₀-alkylene is preferably C₁₋₁₀-alkylene, more preferably C₁₋₆-alkylene, and still more preferably C₁₋₃-alkylene.

In one embodiment, X¹¹ is each independently -(C₁₋₆ alkylene) -O-(C₁₋₆-alkylene)- or -O-(C₁₋₆-alkylene)-.

In a preferred embodiment, X¹¹ is each independently a single bond or linear C₁₋₆-alkylene, preferably a single bond or linear C₁₋₃-alkylene, more preferably a single bond or linear C₁₋₂-alkylene, and still more preferably linear C₁₋₂-alkylene.

In the above formula, R¹³ is each independently H or a monovalent organic group. Such a monovalent organic group is preferably C₁₋₂₀-alkyl.

In a preferred embodiment, R¹³ is each independently H or linear C₁₋₆-alkyl, preferably H or linear C₁₋₃-alkyl, and preferably H or methyl.

In the above formula, R¹⁵ is each independently a single bond, -O-, C₁₋₆-alkylene, or C₁₋₆-alkyleneoxy.

In one embodiment, R¹⁵ is each independently -O-, C₁₋₆-alkylene, or C₁₋₆-alkyleneoxy.

In a preferred embodiment, R¹⁵ is a single bond.

In the above formula, t is each independently an integer of 2 or more.

In a preferred embodiment, t is each independently an integer of 2-10, preferably an integer of 2-6.

In the above formula, R¹⁴ is each independently H, halogen, or -X¹¹-SiR¹¹ₙ₁R¹²₃₋ₙ₁. Such halogen is preferably I, Cl or F, and more preferably F. In a preferred embodiment, R¹⁴ is H.

In one embodiment, formula (S1) is the following formula (S1-a) : 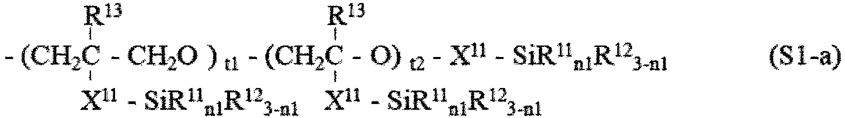 wherein
R¹¹, R¹², R¹³, X¹¹, and n1 have the same definition as described for formula (S1),
t1 and t2 are each independently an integer of 1 or more, preferably an integer of 1-10, and more preferably an integer of 2-10, such as an integer of 1-5 or an integer of 2-5, and
the order of the repeating units in parentheses provided with t1 and t2 is not limited.

In a preferred embodiment, formula (S1) is the following formula (S1-b): 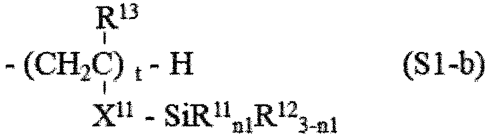 wherein R¹¹, R¹², R¹³, X¹¹, n1, and t have the same definition as described for formula (S1).

In the above formula, R^{a1} is each independently -Z¹-SiR²¹ₚ₁R²²_{q1}R²³ᵣ₁.

Z¹ is each independently -O- or a divalent organic group. The structure denoted as Z¹ hereinafter is bonded to (SiR²¹ₚ₁R²²_{q1}R²³ᵣ₁) on its right side.

In a preferred embodiment, Z¹ is a divalent organic group.

In a preferred embodiment, Z¹ does not include a group that forms a siloxane bond with the Si atom to which Z¹ is bonded.

Z¹ is preferably C₁₋₆-alkylene, -(CH₂)_{z1}-O-(CH₂)_{z2}-(wherein z1 is an integer of 0-6, such as an integer of 1-6, and z2 is an integer of 0-6, such as an integer of 1-6), or -(CH₂)_{z3}-phenylene-(CH₂)_{z4}- (wherein z3 is an integer of 0-6, such as an integer of 1-6, and z4 is an integer of 0-6, such as an integer of 1-6). Such C₁₋₆-alkylene may be linear or branched, and is preferably linear. These groups may be substituted with, for example, one or more substituents selected from F, C₁₋₆-alkyl, C₂₋₆-alkenyl, and C₂₋₆-alkynyl, and are preferably unsubstituted.

In a preferred embodiment, Z¹ is C₁₋₆-alkylene or - (CH₂)_{z3}-phenylene-(CH₂)_{z4}-, preferably -phenylene-(CH₂)_{z4}-.

In another preferred embodiment, Z¹ is C₁₋₃-alkylene. In one embodiment, Z¹ may be -CH₂CH₂CH₂-. In another embodiment, Z¹ may be -CH₂CH₂-.

R²¹ is each independently -Z^{1'}-SiR^{21'}_{p1'}R^{22'}_{q1'}R^{23'}ᵣ₁.

Z^{1'} is each independently -O- or a divalent organic group. The structure denoted as Z^{1'} hereinafter is bonded to (SiR^{21'}_{p1'}R^{22'}_{q1'}R^{23'}_{r1'}) on its right side.

In a preferred embodiment, Z^{1'} is a divalent organic group.

In a preferred embodiment, Z^{1'} does not include a group that forms a siloxane bond with the Si atom to which Z^{1'} is bonded.

Z^{1'} is preferably C₁₋₆-alkylene, - (CH₂)_{z1'}-O-(CH₂)_{z2'}-(wherein z1' is an integer of 0-6, such as an integer of 1-6, and z2' is an integer of 0-6, such as an integer of 1-6), or -(CH₂)_{z3'}-phenylene-(CH₂)_{z4'}- (wherein z3' is an integer of 0-6, such as an integer of 1-6, and z4' is an integer of 0-6, such as an integer of 1-6). Such C₁₋₆-alkylene may be linear or may be branched, and is preferably linear. These groups may be substituted with, for example, one or more substituents selected from F, C₁₋₆-alkyl, C₂₋₆-alkenyl, and C₂₋₆-alkynyl, and are preferably unsubstituted.

In a preferred embodiment, Z^{1'} is C₁₋₆-alkylene or - (CH₂)_{z3'}-phenylene-(CH₂)_{z4'}-, preferably -phenylene-(CH₂)_{z4'}-.

In another preferred embodiment, Z^{1'} is C₁₋₃-alkylene. In one embodiment, Z^{1'} may be -CH₂CH₂CH₂-. In another embodiment, Z^{1'} may be -CH₂CH₂-.

R^{21'} is each independently -Z^{1"}-SiR^{22"}_{q1"}R^{23"}_{r1"}.

Z^{1"} is each independently -O- or a divalent organic group. The structure denoted as Z^{1"} hereinafter is bonded to (SiR^{22"}_{q1"}R^{23"}_{r1"}) on its right side.

In a preferred embodiment, Z^{1"} is a divalent organic group.

In a preferred embodiment, Z^{1"} does not include a group that forms a siloxane bond with the Si atom to which Z^{1"} is bonded.

Z^{1"} is preferably C₁₋₆-alkylene, -(CH₂)_{z1"}-O-(CH₂)_{z2"}-(wherein z1" is an integer of 0-6, such as an integer of 1-6, and z2" is an integer of 0-6, such as an integer of 1-6), or - (CH₂)_{z3"}-phenylene-(CH₂)_{z4"}- (wherein z3" is an integer of 0-6, such as an integer of 1-6, and z4" is an integer of 0-6, such as an integer of 1-6). Such C₁₋₆-alkylene may be linear or branched, and is preferably linear. These groups may be substituted with, for example, one or more substituents selected from F, C₁₋₆-alkyl, C₂₋₆-alkenyl, and C₂₋₆-alkynyl, and are preferably unsubstituted.

In a preferred embodiment, Z^{1"} is C₁₋₆-alkylene or - (CH₂)_{z3"}-phenylene-(CH₂)_{z4"}-, preferably -phenylene-(CH₂)_{z4"}-. When Z^{1"} is such a group, light resistance, in particular ultraviolet resistance, can be further enhanced.

In another preferred embodiment, Z^{1"} is C₁₋₃-alkylene. In one embodiment, Z^{1"} may be -CH₂CH₂CH₂-. In another embodiment, Z^{1"} may be -CH₂CH₂-.

R^{22"} is each independently OH or a hydrolyzable group.

R^{22"} is preferably, each independently, a hydrolyzable group.

R^{22"} is preferably, each independently, -OR^{h}, -OCOR^{h}, - O-N=CR^{h}₂, -NR^{h}₂, -NHR^{h}, -NCO, or halogen (in these formulae, R^{h} is optionally substituted C₁₋₄-alkyl), and more preferably -OR^{h} (that is, alkoxy). Examples of R^{h} include unsubstituted alkyl such as methyl, ethyl, propyl, isopropyl, n-butyl, and isobutyl; and substituted alkyl such as chloromethyl. Among such groups, alkyl, in particular an unsubstituted alkyl, is preferred, and methyl or ethyl is more preferred. In one embodiment, R^{h} is methyl, and in another embodiment, R^{h} is ethyl.

R^{23"} is each independently a monovalent organic group. Such a monovalent organic group is a monovalent organic group excluding the hydrolyzable group.

In R^{23"}, the monovalent organic group is preferably C₁₋₂₀-alkyl, more preferably C₁₋₆-alkyl, and still more preferably methyl.

q1" is each independently an integer of 0-3, and r1" is each independently an integer of 0-3. The sum of q1" and r1" is 3 in the (SiR^{22"}_{q1"}R^{23"}_{r1"}) unit.

q1" is each independently an integer of preferably 1-3, more preferably 2-3, and still more preferably 3 for each SiR^{22"}_{q1"}R^{23"}_{r1"}) unit.

R^{22'} is each independently OH or a hydrolyzable group.

R^{22'} is preferably, each independently, a hydrolyzable group.

R^{22'} is preferably, each independently, -OR^{h}, -OCOR^{h}, - O-N=CR^{h}₂, -NR^{h}₂, -NHR^{h}, -NCO, or halogen (in these formulae, R^{h} is optionally substituted C₁₋₄-alkyl), and more preferably -OR^{h} (that is, an alkoxy group). Examples of R^{h} include unsubstituted alkyl such as methyl, ethyl, propyl, isopropyl, n-butyl, and isobutyl; and substituted alkyl such as chloromethyl. Among such groups, alkyl, in particular unsubstituted alkyl, is preferred, and methyl or ethyl is more preferred. In one embodiment, R^{h} is methyl, and in another embodiment, R^{h} is ethyl.

R^{23'} is each independently a monovalent organic group. Such a monovalent organic group is a monovalent organic group excluding the hydrolyzable group.

In R^{23'}, the monovalent organic group is preferably C₁₋₂₀-alkyl, more preferably C₁₋₆-alkyl, and still more preferably methyl.

p1' is each independently an integer 0-3, q1' is each independently an integer of 0-3, and r1' is each independently an integer of 0-3. The sum of p', q1', and r1' is 3 in the (SiR^{21'}_{p1'}R^{22'}_{q1'}R^{23'}_{r1'}) unit.

In one embodiment, p1' is 0.

In one embodiment, p1' may be each independently an integer of 1-3, an integer of 2-3, or 3 for each (SiR^{21'}_{p1'}R^{22'}_{q1'}R^{23'}_{r1'}) unit. In a preferred embodiment, p1' is 3.

In one embodiment, q1' is each independently an integer of 1-3, preferably an integer of 2-3, and more preferably 3 for each (SiR^{21'}_{p1'}R^{22'}_{q1'}R^{23'}_{r1'}) unit.

In one embodiment, p1' is 0, and q1' is each independently an integer of 1-3, preferably an integer of 2-3, and still more preferably 3 for each (SiR^{21'}_{p1'}R^{22'}_{q1}R^{23'}_{r1'}) unit.

R²² is each independently OH or a hydrolyzable group.

R²² is preferably, each independently, a hydrolyzable group.

R²² is preferably, each independently, -OR^{h}, -OCOR^{h}, -O-N=CR^{h}₂, -NR^{h}₂, -NHR^{h}, -NCO, or halogen (in these formulae, R^{h} is optionally substituted C₁₋₄-alkyl), and more preferably - OR^{h} (that is, alkoxy). Examples of R^{h} include unsubstituted alkyl such as methyl, ethyl, propyl, isopropyl, n-butyl, and isobutyl; and substituted alkyl such as chloromethyl. Among such groups, alkyl, in particular unsubstituted alkyl, is preferred, and methyl or ethyl is more preferred. In one embodiment, R^{h} is methyl, and in another embodiment, R^{h} is ethyl.

R²³ is each independently a monovalent organic group. Such a monovalent organic group is a monovalent organic group excluding the hydrolyzable group.

In R²³, the monovalent organic group is preferably C₁₋₂₀-alkyl group, more preferably C₁₋₆-alkyl, and still more preferably methyl.

p1 is each independently an integer 0-3, q1 is each independently an integer of 0-3, and r1 is each independently an integer of 0-3. The sum of p1, q1, and r1 is 3 in the (SiR²¹ₚ₁R²²_{q1}R²³ᵣ₁) unit.

In one embodiment, p1 is 0.

In one embodiment, p1 may be each independently an integer of 1-3, an integer of 2-3, or 3 for each (SiR²¹ₚ₁R²²_{q1}R²³ᵣ₁) unit. In a preferred embodiment, p1 is 3.

In one embodiment, q1 is each independently an integer of 1-3, preferably an integer of 2-3, and more preferably 3 for each (SiR²¹ₚ₁R²²_{q1}R²³ᵣ₁) unit.

In one embodiment, p1 is 0, and q1 is each independently an integer of 1-3, preferably an integer of 2-3, and still more preferably 3 for each (SiR²¹ₚ₁R²²_{q1}R²³ᵣ₁) unit.

In the above formula, R^{b1} is each independently OH or a hydrolyzable group.

R^{b1} is preferably, each independently, a hydrolyzable group.

R^{b1} is preferably, each independently, -OR^{h}, -OCOR^{h}, -O-N=CR^{h}₂, -NR^{h}₂, -NHR^{h}, -NCO, or halogen (in these formulae, R^{h} is optionally substituted C₁₋₄-alkyl), and more preferably - OR^{h} (that is, alkoxy). Examples of R^{h} include unsubstituted alkyl such as methyl, ethyl, propyl, an isopropyl, n-butyl, and isobutyl; and substituted alkyl such as chloromethyl. Among such groups, alkyl, in particular unsubstituted alkyl, is preferred, and methyl or ethyl is more preferred. In one embodiment, R^{h} is methyl, and in another embodiment, R^{h} is ethyl.

In the above formula, R^{c1} is each independently a monovalent organic group. Such a monovalent organic group is a monovalent organic group excluding the hydrolyzable group.

In R^{c1}, the monovalent organic group is preferably C₁₋₂₀-alkyl goup, more preferably C₁₋₆-alkyl, and still more preferably methyl.

k1 is each independently an integer 0-3, l1 is each independently an integer of 0-3, and m1 is each independently an integer of 0-3. The sum of k1, l1, and m1 is 3 in the (SiR^{a1}ₖ₁R^{b1}ₗ₁R^{cl}ₘ₁) unit.

In one embodiment, k1 is each independently an integer of 1-3, preferably 2 or 3, and more preferably 3 for each (SiR^{a1}ₖ₁R^{b1}ₗ₁R^{c1}ₘ₁) unit. In a preferred embodiment, k1 is 3.

R^{d1} is each independently -Z²-CR³¹ₚ₂R³²_{q2}R³³ᵣ₂.

Z² is each independently a single bond, -O-, or a divalent organic group. The structure denoted as Z² hereinafter is bonded to (CR³¹ₚ₂R³²_{q2}R³³ᵣ₂) on its right side.

In a preferred embodiment, Z² is a divalent organic group.

In a preferred embodiment, Z² does not contain a siloxane bond.

Z² is preferably C₁₋₆-alkylene, -(CH₂)_{z5}-O-(CH₂)_{z6}-(wherein z5 is an integer of 0-6, such as an integer of 1-6, and z6 is an integer of 0-6, such as an integer of 1-6), or -(CH₂)_{z7}-phenylene-(CH₂)_{z8}- (wherein z7 is an integer of 0-6, such as an integer of 1-6, and z8 is an integer of 0-6, such as an integer of 1-6). Such C₁₋₆-alkylene may be linear or branched, and is preferably linear. These groups may be substituted with, for example, one or more substituents selected from F, C₁₋₆-alkyl, C₂₋₆-alkenyl, and C₂₋₆-alkynyl, and are preferably unsubstituted.

In a preferred embodiment, Z² is C₁₋₆-alkylene or - (CH₂)_{z7}-phenylene-(CH₂)_{z8}-, preferably -phenylene-(CH₂)_{z8}-. When Z² is such a group, light resistance, in particular ultraviolet resistance, can be further enhanced.

In another preferred embodiment, Z² is C₁₋₃-alkylene. In one embodiment, Z² may be -CH₂CH₂CH₂-. In another embodiment, Z² may be -CH₂CH₂-.

R³¹ is each independently -Z^{2'}-CR^{32'}_{q2'}R^{33'}_{r2'}.

Z^{2'} is each independently a single bond, -O-, or a divalent organic group. The structure denoted as Z^{2'} hereinafter is bonded to (CR^{32'}_{q2'}R^{33'}_{r2'}) on its right side.

In a preferred embodiment, Z^{2'} does not contain a siloxane bond.

Z^{2'} is preferably C₁₋₆-alkylene, - (CH₂)_{z5'}-O-(CH₂)_{z6'}-(wherein z5' is an integer of 0-6, such as an integer of 1-6, and z6' is an integer of 0-6, such as an integer of 1-6), or -(CH₂)_{z7'}-phenylene-(CH₂)_{z8'}- (wherein z7' is an integer of 0-6, such as an integer of 1-6, and z8' is an integer of 0-6, such as an integer of 1-6). Such C₁₋₆- group may be linear or branched, and is preferably linear. These groups may be substituted with, for example, one or more substituents selected from F, C₁₋₆-alkyl, C₂₋₆-alkenyl, and C₂₋₆-alkynyl, and are preferably unsubstituted.

In a preferred embodiment, Z^{2'} is C₁₋₆-alkylene or - (CH₂)_{z7'}-phenylene-(CH₂)_{z8'}-, preferably -phenylene-(CH₂)_{z8'}-. When Z^{2'} is such a group, light resistance, in particular ultraviolet resistance, can be further enhanced.

In another preferred embodiment, Z^{2'} is C₁₋₃-alkylene. In one embodiment, Z^{2'} may be -CH₂CH₂CH₂-. In another embodiment, Z^{2'} may be -CH₂CH₂-.

R^{32'} is each independently -Z³-SiR³⁴ₙ₂R³⁵₃₋ₙ₂.

Z³ is each independently a single bond, -O-, or a divalent organic group. The structure denoted as Z³ hereinafter is bonded to (SiR³⁴ₙ₂R³⁵₃₋ₙ₂) on its right side.

In one embodiment, Z³ is -O-.

In one embodiment, Z³ is a divalent organic group.

In a preferred embodiment, Z³ does not contain a siloxane bond.

Z³ is preferably C₁₋₆-alkylene, -(CH₂)_{z5"}-O-(CH₂)_{z6"}-(wherein z5" is an integer of 0-6, such as an integer of 1-6, and z6" is an integer of 0-6, such as an integer of 1-6), or -(CH₂)_{z7"}-phenylene-(CH₂)_{z8"}- (wherein z7" is an integer of 0-6, such as an integer of 1-6, and z8" is an integer of 0-6, such as an integer of 1-6). Such C₁₋₆-alkylene may be linear or branched, and is preferably linear. These groups may be substituted with, for example, one or more substituents selected from F, C₁₋₆-alkyl, C₂₋₆-alkenyl, and C₂₋₆-alkynyl, and are preferably unsubstituted.

In a preferred embodiment, Z³ is C₁₋₆-alkylene or - (CH₂)_{z7"}-phenylene-(CH₂)_{z8"}-, preferably-phenylene-(CH₂)_{z8"}-. When Z³ is such a group, light resistance, in particular ultraviolet resistance, can be further enhanced.

In another preferred embodiment, Z³ is C₁₋₃-alkylene. In one embodiment, Z³ may be -CH₂CH₂CH₂-. In another embodiment, Z³ may be -CH₂CH₂-.

R³⁴ is each independently OH or a hydrolyzable group.

R³⁴ is preferably, each independently, a hydrolyzable group.

R³⁴ is preferably, each independently, -OR^{h}, -OCOR^{h}, -O-N=CR^{h}₂, -NR^{h}₂, -NHR^{h}, -NCO, or halogen (in these formulae, R^{h} is optionally substituted C₁₋₄-alkyl), and more preferably - OR^{h} (that is, alkoxy). Examples of R^{h} include unsubstituted alkyl such as methyl, ethyl, propyl, isopropyl, n-butyl, and isobutyl; and substituted alkyl such as chloromethyl. Among such groups, alkyl, in particular an unsubstituted alkyl, is preferred, and methyl or ethyl is more preferred. In one embodiment, R^{h} is methyl, and in another embodiment, R^{h} is ethyl.

R³⁵ is each independently a monovalent organic group. Such a monovalent organic group is a monovalent organic group excluding the hydrolyzable group.

In R³⁵, the monovalent organic group is preferably C₁₋₂₀-alkyl, more preferably C₁₋₆-alkyl, and still more preferably methyl.

In the above formula, n2 is each independently an integer of 0-3 for each (SiR³⁴ₙ₂R³⁵₃₋ₙ₂) unit. However, in the end moiety of formula (S3), at least two (SiR³⁴ₙ₂R³⁵₃₋ₙ₂) units with n2 of 1-3 are present. In other words, in the end moiety of formula (S3), at least two Si atoms to which OH or a hydrolyzable group is bonded are present.

n2 is each independently an integer of preferably 1-3, more preferably 2-3, and still more preferably 3 for each (SiR³⁴ₙ₂R³⁵₃₋ₙ₂) unit.

R^{33'} is each independently H, OH, or a monovalent organic group. Such a monovalent organic group is a monovalent organic group excluding the hydrolyzable group.

In R^{33'}, the monovalent organic group is preferably C₁₋₂₀-alkyl or -(CₛH₂ₛ)ₜ₁-(O-CₛH₂ₛ)ₜ₂ (wherein s is an integer of 1-6, preferably an integer of 2-4, t1 is 1 or 0, preferably 0, and t2 is an integer of 1-20, preferably an integer of 2-10, and more preferably an integer of 2-6), more preferably C₁₋₂₀-alkyl, still more preferably C₁₋₆-alkyl, and particularly preferably methyl.

In one embodiment, R^{33'} is OH.

In another embodiment, R^{33'} is a monovalent organic group, preferably C₁₋₂₀-alkyl, and more preferably C₁₋₆-alkyl.

q2' is each independently an integer of 0-3, and r2' is each independently an integer of 0-3. The sum of q2' and r2' is 3 in the (CR^{32'}_{q2'}R^{33'}_{r2'}) unit.

q2' is each independently an integer of preferably 1-3, more preferably 2-3, and still more preferably 3 for each (CR^{32'}_{q2'}R^{33'}_{r2'}) unit.

R³² is each independently -Z³-SiR³⁴ₙ₂R³⁵₃₋ₙ₂. Such -Z³-SiR³⁴ₙ₂R³⁵₃₋ₙ₂ has the same definition as described for R^{32'}.

R³³ is each independently H, OH, or a monovalent organic group. Such a monovalent organic group is a monovalent organic group excluding the hydrolyzable group.

In R³³, the monovalent organic group is preferably C₁₋₂₀-alkyl or -(CₛH₂ₛ)ₜ₁-(O-CₛH₂ₛ)ₜ₂ (wherein s is an integer of 1-6, preferably an integer of 2-4, t1 is 1 or 0, preferably 0, and t2 is an integer of 1-20, preferably an integer of 2-10, and more preferably an integer of 2-6), more preferably C₁₋₂₀-alkyl, still more preferably C₁₋₆-alkyl, and particularly preferably methyl.

In one embodiment, R³³ is OH.

In another embodiment, R³³ is a monovalent organic group, preferably C₁₋₂₀-alkyl, and more preferably C₁₋₆-alkyl.

p2 is each independently an integer of 0-3, q2 is each independently an integer of 0-3, and r2 is each independently an integer of 0-3. The sum of p2, q2, and r2 is 3 in the (CR³¹ₚ₂R³²_{q2}R³³ᵣ₂) unit.

In one embodiment, p2 is 0.

In one embodiment, p2 may be each independently an integer of 1-3, an integer of 2-3, or 3 for each (CR³¹ₚ₂R³²_{q2}R³³ᵣ₂) unit. In a preferred embodiment, p2 is 3.

In one embodiment, q2 is each independently an integer of 1-3, preferably an integer of 2-3, and more preferably 3 for each (CR³¹ₚ₂R³²_{q2}R³³ᵣ₂) unit.

In one embodiment, p2 is 0, and q2 is each independently an integer of 1-3, preferably an integer of 2-3, and still more preferably 3 for each (CR³¹ₚ₂R³²_{q2}R³³ᵣ₂) unit.

R^{e1} is each independently -Z³-SiR³⁴ₙ₂R³⁵₃₋ₙ₂. Such -Z³-SiR³⁴ₙ₂R³⁵₃₋ₙ₂ has the same definition as described for R^{32'}.

R^{f1} is each independently H, OH, or a monovalent organic group. Such a monovalent organic group is a monovalent organic group excluding the hydrolyzable group.

In R^{f1}, the monovalent organic group is preferably C₁₋₂₀-alkyl or -(CₛH₂ₛ)t₁-(O-CₛH₂ₛ)t₂ (wherein s is an integer of 1-6, preferably an integer of 2-4, t1 is 1 or 0, preferably 0, and t2 is an integer of 1-20, preferably an integer of 2-10, and more preferably an integer of 2-6), more preferably C₁₋₂₀-alkyl, still more preferably C₁₋₆-alkyl, and particularly preferably methyl.

In one embodiment, R^{f1} is OH.

In another embodiment, R^{f1} is a monovalent organic group, preferably C₁₋₂₀-alkyl, and more preferably C₁₋₆-alkyl.

k2 is each independently an integer 0-3, l2 is each independently an integer of 0-3, and m2 is each independently an integer of 0-3. The sum of k2, 12, and m2 is 3 in the (CR^{d1}ₖ₂R^{e1}ₗ₂^{Rf1}ₘ₂) unit.

In one embodiment, 2 or more, such as 2-27, preferably 2-9, more preferably 2-6, still more preferably 2-3, and particularly preferably 3 (SiR³⁴ₙ₂R³⁵₃₋ₙ₂) units with n2 of 1-3, preferably 2 or 3, and more preferably 3 are present in each end moiety of formula (S3).

In a preferred embodiment, when R^{32'} is present in formula (S3), n2 is an integer of 1-3, preferably 2 or 3, and more preferably 3 in at least one, preferably all of R^{32'} groups.

In a preferred embodiment, when R³² is present in formula (S3), n2 is an integer of 1-3, preferably 2 or 3, and more preferably 3 in at least one, preferably all of R³² groups.

In a preferred embodiment, when R^{e1} is present in formula (S3), n2 is an integer of 1-3, preferably 2 or 3, and more preferably 3 in at least one, preferably all of R^{a1} groups.

In a preferred embodiment, in formula (S3), k2 is 0, l2 is 2 or 3, preferably 3, and n2 is 2 or 3, preferably 3.

R^{g1} and R^{h1} are each independently -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂. Here, R¹¹, R¹², R^{a1}, R^{b2}, R^{c1}, R^{d1}, R^{e1}, R^{f1}, n1, k1, 11, m1, k2, l2, and m2 have the same definition as described above.

In a preferred embodiment, R^{g1} and R^{h1} are each independently -Z⁴-SiR¹¹ₙ₁R¹²₃₋ₙ₁.

Z⁴ is each independently a single bond, -O-, or a divalent organic group. The structure denoted as Z⁴ hereinafter is bonded to (SiR¹¹ₙ₁R¹²₃₋ₙ₁) on its right side.

In one embodiment, Z⁴ is -O-.

In one embodiment, Z⁴ is a divalent organic group.

In a preferred embodiment, Z⁴ does not contain a siloxane bond.

Z⁴ is preferably C₁₋₆-alkylene, -(CH₂)_{z5"}-O-(CH₂)_{z6"}-(wherein z5" is an integer of 0-6, such as an integer of 1-6, and z6" is an integer of 0-6, such as an integer of 1-6), or -(CH₂)_{z7"}-phenylene-(CH₂)_{z8"}- (wherein z7" is an integer of 0-6, such as an integer of 1-6, and z8" is an integer of 0-6, such as an integer of 1-6). Such C₁₋₆ alkylene may be linear or branched, and is preferably linear. These groups may be substituted with, for example, one or more substituents selected from F, C₁₋₆-alkyl, C₂₋₆-alkenyl, and C₂₋₆-alkynyl, and are preferably unsubstituted.

In a preferred embodiment, Z⁴ is C₁₋₆-alkylene or - (CH₂)_{z7"}-phenylene-(CH₂)_{z8"}-, preferably -phenylene-(CH₂)_{z8"}-. When Z³ is such a group, light resistance, in particular ultraviolet resistance, can be further enhanced.

In another preferred embodiment, Z⁴ is C₁₋₃-alkylene. In one embodiment, Z⁴ may be -CH₂CH₂CH₂-. In another embodiment, Z⁴ may be -CH₂CH₂-.

In one embodiment, the formulae (S1), (S3), (S4), and (S5) do not contain a siloxane bond.

In one embodiment, R^{H} is a group of formula (S3), (S4), or (S5).

In one embodiment, R^{H} is a group of formula (S3) or (S4).

In one embodiment, R^{H} is a group of formula (S5).

In one embodiment, R^{H} is a group of formula (S1). In a preferred embodiment, formula (S1) is a group of formula (S1-b). In a preferred embodiment, in the formula, R¹³ is H, X¹¹ is a single bond or -R²⁸-Oₓ-R²⁹- (wherein R²⁸ and R²⁹ are each independently a single bond or C₁₋₂₀-alkylene, and x is 0 or 1), and n1 is 1-3, preferably 2-3, and still more preferably 3.

In one embodiment, R^{H} is a group of formula (S3). In a preferred embodiment, formula (S3) is -SiR^{a1}₂R^{c1} or -SiR^{a1}₃, R^{a1} is -Z¹-SiR²²_{q1}R²³ᵣ₁, Z¹ is C₁-₆-alkylene, -(CH₂)_{z1}-O-(CH₂)_{z2}-(wherein z1 is an integer of 0-6, such as an integer of 1-6, and z2 is an integer of 0-6, such as an integer of 1-6), or -(CH₂)_{z3}-phenylene-(CH₂)_{z4}- (wherein z3 is an integer of 0-6, such as an integer of 1-6, and z4 is an integer of 0-6, such as an integer of 1-6), preferably C₁₋₆-alkylene, and q1 is 1-3, preferably 2-3, and still more preferably 3.

In one embodiment, R^{H} is a group of formula (S4). In a preferred embodiment, formula (S4) is -CR^{e1}₂R^{f1} or -CR^{e1}₃, R^{e1} is -Z³-SiR³⁴ₙ₂R³⁵₃₋ₙ₂, Z³ is C₁₋₆-alkylene, -(CH₂)_{z5"}-O-(CH₂)_{z6"}-(wherein z5" is an integer of 0-6, such as an integer of 1-6, and z6" is an integer of 0-6, such as an integer of 1-6), or -(CH₂)_{z7"}-phenylene-(CH₂)_{z8"}- (wherein z7" is an integer of 0-6, such as an integer of 1-6, and z8" is an integer of 0-6, such as an integer of 1-6), preferably C₁₋₆-alkylene, and n2 is 1-3, preferably 2-3, and still more preferably 3.

In one embodiment, R^{H} is a group of formula (S5). In a preferred embodiment, R^{g1} and R^{h1} are -Z⁴-SiR¹¹ₙ₁R¹²₃₋ₙ₁, Z⁴ is C₁₋₆-alkylene, -(CH₂)_{z5"}-O-(CH₂)_{z6"}- (wherein z5" is an integer of 0-6, such as an integer of 1-6, and z6" is an integer of 0-6, such as an integer of 1-6), or -(CH₂)_{z7"}-phenylene-(CH₂)_{z8"}- (wherein z7" is an integer of 0-6, such as an integer of 1-6, and z8" is an integer of 0-6, such as an integer of 1-6), preferably C₁₋₆-alkylene, and n1 is 1-3, preferably 2-3, and still more preferably 3.

X^{A} is interpreted as a linker connecting the silalkylene moiety (R^{S1} or R^{S2}), which mainly provides functions such as water-repellency, to the silane moiety (R^{H}) providing a binding ability to a substrate. Accordingly, X^{A} may be any group as long as the compounds of formula (1) can stably exist.

X^{A} is a divalent group of the formula:

-(R⁵¹)ₚ₅-(X⁵¹)_{q5}-

wherein, each independently,
   - R⁵¹: is -(CH₂)ₛ₅-, or o-, m-, or p-phenylene,
   - s5: is an integer of 1-20,
   - X⁵¹: is -(X⁵²)ₗ₅-,
   X⁵² X⁵² is a group selected from -O-, -S-, o-, m-, or p-phenylene, -CO-, -C(O)O-, -CONR⁵⁴-, -O-CONR⁵⁴-, -NR⁵⁴-, and -(CH₂)ₙ₅-,
   R⁵⁴ is H or a monovalent organic group,
   n5 is an integer of 1-20,
   15 is an integer of 1-10,
   - p5: is 0 or 1, and
   - q5: is 0 or 1,
where at least one of p5 and q5 is 1, and the order of the repeating units in parentheses provided with p5 or q5 is not limited.

In one embodiment, examples of X^{A} include a divalent organic group represented by the following formula:

-(R⁵¹)ₚ₅-(X⁵¹)_{q5}-

wherein
R⁵¹ is preferably -(CH₂)ₛ₅-,
s5 is preferably an integer of 1-15, more preferably 1-10, and even more preferably 1-6, such as 1-3, or is preferably an integer of 4-15, and more preferably 7-13,
R⁵⁴ is preferably H, phenyl, C₁₋₆-alkyl (preferably methyl), or an oxyalkylene-containing group having 1-10 carbon atoms,
n5 is preferably an integer of 1-15, more preferably 1-10, and even more preferably 1-6, such as 1-3,
15 is preferably an integer of 1-5, and more preferably 1-3,
Here, X^{A} (typically a hydrogen atom of X^{A}) is optionally substituted with one or more substituents selected from F, C₁₋₃-alkyl, and C₁₋₃-fluoroalkyl. In a preferred embodiment, X^{A} is not substituted with any of these groups.

The oxyalkylene-containing group having 1-10 carbon atoms is a group containing -O-(C₁₋₁₀-alkylene)-, for example -R⁵⁵-(-O-(C₁₋₁₀-alkylene))ₙ-R⁵⁶ (wherein R⁵⁵ is a single bond or a divalent organic group, preferably C₁₋₆-alkylene, n is an arbitrary integer, preferably an integer of 2-10, and R⁵⁶ is H or a monovalent organic group, preferably C₁₋₆-alkyl). The alkylene group may be linear or may be branched.

In a preferred embodiment, X^{A} is each independently - (R⁵¹)ₚ₅-(X⁵¹)_{q5}-R⁵²-. R⁵² is a single bond, -(CH₂)ₜ₅-, or o-, m-, or p-phenylene, and is preferably -(CH₂)ₜ₅-. t5 is an integer of 1-20, preferably an integer of 2-6, and more preferably an integer of 2-3. Here, R⁵² (typically H of R⁵²) is optionally substituted with one or more substituents selected from F, C₁₋₃-alkyl, and C₁₋₃-fluoroalkyl. In a preferred embodiment, R⁵⁶ is not substituted with any of these groups.

Preferably, X^{A} may be each independently

C₁₋₂₀-alkylene,

or

-R⁵¹-X⁵³-R⁵²-,

wherein R⁵¹ and R⁵² have the same definition as described above, and
X⁵³ is

   -O-,

   -S-,

   -CO-,

   -C(O)O-,

   -CONR⁵⁴-,

   -O-CONR⁵⁴-,

   -O-(CH₂)ᵤ₅-CONR⁵⁴-,

   -O-(CH₂)ᵤ₅-CO-,

   or

   -CONR⁵⁴-(CH₂)ᵤ₅-N(R⁵⁴)-,
wherein R⁵⁴ has the same definition as described above, and
u5 is an integer of 1-20, preferably an integer of 2-6, and more preferably an integer of 2-3.

More preferably, X^{A} is each independently

C₁₋₂₀-alkylene,

-(CH₂)ₛ₅-X⁵³-,

-X⁵³-(CH₂)ₜ₅-,

or

- (CH₂)ₛ₅-X⁵³-(CH₂)t₅-,

wherein X⁵³, s5, and t5 have the same definition as described above.

In a preferred embodiment, X^{A} may be each independently

C₁₋₂₀-alkylene,

-(CH₂)ₛ₅-X⁵³-,

-X⁵³-(CH₂)t₅-,

or

-(CH₂)ₛ₅-X⁵³-(CH₂)ₜ₅-,

wherein
X⁵³ is -O-, -CO-, -CONR⁵⁴-, -O-CONR⁵⁴-, -O-(CH₂)ᵤ₅-CONR⁵⁴-, or -O- (CH₂)ᵤ₅-CO-,
R⁵⁴ is each independently H, phenyl, C₁₋₆-alkyl (preferably methyl), or an oxyalkylene-containing group having 1-10 carbon atoms, and
s5, t5, and u5 have the same definition as described above.

In a preferred embodiment, X^{A} may be each independently

-(CH₂)ₛ₅-O-(CH₂)t₅-,

-(CH₂)ₛ₅-CONR⁵⁴-(CH₂)ₜ₅-,

-(CH₂)ₛ₅-O-(CH₂)ᵤ₅-CO-,

or

-(CH₂)ₛ₅-O-(CH₂)ᵤ₅-CONR⁵⁴-(CH₂)ₜ₅-,

wherein
R⁵⁴ is each independently H, phenyl, C₁₋₆-alkyl (preferably methyl), or an oxyalkylene-containing group having 1-10 carbon atoms, and
s5, t5, and u5 have the same definition as described above.

In a preferred embodiment, X^{A} is C₁₋₂₀-alkylene or - (CH₂)ₛ₅-CONH-(CH₂)t₅-.

In one embodiment, X^{A} is C₁₋₂₀-alkylene.

In another embodiment, X^{A} is -(CH₂)ₛ₅-CONH-(CH₂)ₜ₅-.

X^{A} is each independently optionally substituted with one or more substituents selected from F, C₁₋₃-alkyl, and C₁₋₃-fluoroalkyl (preferably C₁₋₃-perfluoroalkyl). In one embodiment, X^{A} is unsubstituted.

X^{A} is bonded to R^{S1} or R^{S2} on its left side, and bonded to R^{H} on its right side.

The silane compound of formula (1) is not limited, and it may have a number average molecular weight of 5 × 10² to 1 × 10⁵. It is preferable that the silane compound of formula (1) has a number average molecular weight of preferably 1,000-30,000, and more preferably 1,500-10,000, from the viewpoint of abrasion durability. The "number average molecular weight" is defined as a value obtained by ¹H-NMR measurement.

The silane compound can be obtained by, for example, allowing a compound having a silalkylene structure to react with a compound having a hydrolyzable silane group.

As for the synthesis of a polysilalkylene, a method by ring-opening polymerization of silacyclobutane is known (for example, JP-A-2015-54945).

As a monomer used for the synthesis, a silacycloalkane (a cyclic silalkylene) can be used. Examples thereof include 1,1-dimethylsilacyclobutane, 1,1-dimethylsilacyclopentane, 1,1-dimethylsilacyclohexane, 4,4-dimethyl-1-oxa-4-silacyclohexane, 1-ethyl-1-methylsilacyclobutane, 1-methyl-1-propylsilacyclobutane, 1-butyl-1-methylsilacyclobutane, 1-hexyl-1-methylsilacyclobutane, and 1-methyl-1-octylsilacyclobutane.

As for the synthesis of a polysilalkylenesiloxane, a method by polycondensation of 1,2-bis(chlorodimethylsilyl)ethane or ring-opening polymerization of 2,2,5,5-tetramethyl-2,5-disila-1-oxacyclopentane is known (for example, Org. Lett., 8(21), 4683 (2006)).

As a monomer used for the polycondensation, a dichlorosilane compound or a dialkoxysilane compound can be used. Examples thereof include 1,2-bis(chlorodimethylsilyl)ethane, 1,3-bis(chlorodimethylsilyl)propane, 1,6-bis(chlorodimethylsilyl)hexane, 1,8-bis(chlorodimethylsilyl)octane, 1,2-bis(methoxydimethylsilyl)ethane, 1,3-bis(methoxydimethylsilyl)propane, 1,6-bis(methoxydimethylsilyl)hexane, and 1,8-bis(methoxydimethylsilyl)octane.

As a monomer used for the ring-opening polymerization, a cyclic silalkylenesiloxane compound can be used. Examples thereof include 2,2,5,5-tetramethyl-2,5-disila-1-oxacyclopentane, 2,2,6,6-tetramethyl-2,6-disila-1-oxacyclohexane, and 2,2,4,4,6,6,8,8-octamethyl-2,4,6,8-tetrasila-1,5-dioxacyclooctane.

After the ring-opening polymerization or polycondensation, the resulting polysilalkylene or polysilalkylenesiloxane is allowed to react with a compound having a reactive silane group, thereby introducing an olefin into an end of a compound having a silalkylene structure. As the compound having a reactive silane group, a monochlorosilane compound can be used.

Examples of the monochlorosilane compound include monochlorosilane compounds having an olefinic structure at an end, such as those shown below:

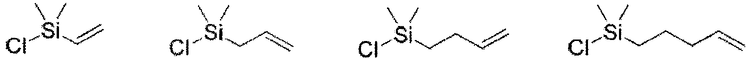

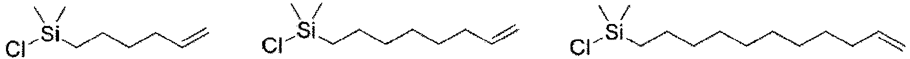

Next, a compound of the formula (R^{S1}-R⁶¹-CH=CH₂ (1a-1) wherein R^{S1} has the same definition as for R^{S1} in the formula (1), and R⁶¹ is a single bond or a divalent organic group, is allowed to react with a compound of formula (HSiR⁶⁰₃ (4) wherein R⁶⁰ is each independently halogen (for example, I, Br, Cl, or F) or C₁₋₆-alkoxy,
to obtain a compound of formula (1a-2):

R^{S1}-R⁶¹-CH₂CH₂-SiR⁶⁰₃ (1a-2)

wherein individual reference symbols have the same definition as described above.
Next, the compound of formula (1a-2) is allowed to react with a compound of formula (5):

Hal-J-R⁶²-CH=CH₂ (5)

wherein
Hal is halogen (for example, I, Br, Cl, or F),
J is Mg, Cu, Pd or Zn, and
R⁶² is a bond or C₁₋₁₂-alkylene,
to obtain a compound of formula (1a-3):

R^{S1}-R^{61'}-Si(R⁶²-CH=CH₂)₃ (1a-3)

wherein
R^{61'} is a divalent organic group, and
the other reference symbols have the same definition as described above.
Next, the compound of formula (1a-3) is allowed to react with a compound of formula (6):

HSiR⁶³ₘR⁶⁴₃₋ₘ (6)

wherein
R⁶³ is each independently OH or a hydrolyzable group,
R⁶⁴ is each independently a monovalent organic group, and
m is 1-3,
thereby obtaining a silane compound of formula (1-1):

R^{S1}-R^{61'}-Si(R^{62'}-SiR⁶³ₘR⁶⁴₃₋ₘ)₃ (1-1)

wherein
R^{62'} is C₂₋₁₄-alkylene, and
the other reference symbols have the same definition as described above.

As another method, the polysilalkylene or polysilalkylenesiloxane obtained as described above is allowed to react with a compound having a reactive silane group, thereby introducing a carbonyl group into an end of a compound having a silalkylene structure.

The compound having a reactive silane group is, for example, a compound of the formula:

R⁷⁴Si(R⁷¹)₂-R⁷²-COOR⁷³

wherein
R⁷¹ is each independently C₁₋₁₂-alkyl, preferably C₁₋₆-alkyl, more preferably C₁₋₃-alkyl, and still more preferably methyl, optionally substituted with a halogen atom,
R⁷² is C₂₋₁-alkylene, preferably C₃₋₅-alkylene, optionally substituted with a halogen atom,
R⁷³ is H or C₁₋₃-alkyl, preferably methyl or ethyl, and more preferably methyl, optionally substituted with a halogen atom, and
R⁷⁴ is halogen, OH, or a hydrolyzable group, preferably halogen or OH, and more preferably Cl or OH.
The alkyl group may be linear branched. The alkyl group is preferably unsubstituted. The alkylene group may be linear or branched, and is preferably linear. The alkylene group is preferably unsubstituted. The halogen atom is, for example, F, Cl, Br or I, preferably Cl.

Specifically, examples of the compound having a reactive silane group include compounds having monochlorosilane having an ester structure at an end, such as those shown below:

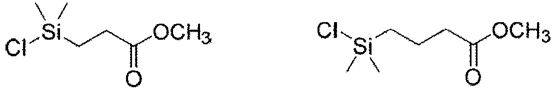

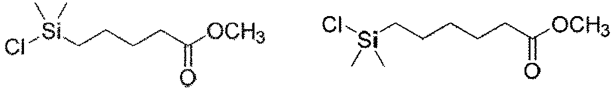

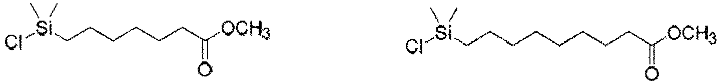

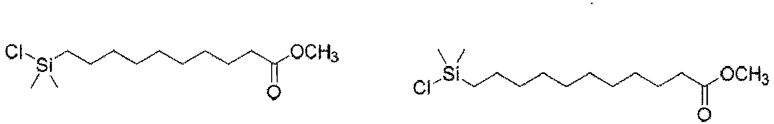

Next, a compound of formula (1b-1):

R^{S1}-R⁶¹-COOR⁶⁵ (1b-1)

wherein
R^{S1} has the same definition as for R^{S1} in formula (1), and R⁶¹ is a single bond or a divalent organic group, and
R⁶⁵ is H or C₁₋₆-alkyl,
is allowed to react with a compound of formula (7):

NH₂-R⁶⁶-C(R⁶²-CH=CH₂)₃ (7)

wherein
R⁶² is a single bond or C₁₋₁₂-alkylene, and
R⁶⁶ is a single bond or C₁₋₁₂-alkylene,
to obtain a compound of formula (1b-2):

R^{S1}-R⁶¹-CONH-R⁶⁶-C(R⁶²-CH=CH₂)₃ (1b-2)

wherein individual reference symbols have the same definition as described above.
Next, the compound of formula (1b-2) is allowed to react with a compound of formula (6) as defined above,,
thereby obtaining a silane compound offormula (1-2):

R^{S1}-R⁶¹-CONH-R⁶⁶-C(R^{62'}-SiR⁶³ₘR⁶⁴₃₋ₘ)₃ (1-2)

wherein
R^{62'} is C₂₋₁₄-alkylene, and
the other reference symbols have the same definition as described above.

As another method, a compound of formula (1b-1):

R^{S1}-R⁶¹-COOR⁶⁵ (1b-1)

wherein
R^{S1} has the same definition as for R^{S1} in formula (1), and R⁶¹ is C₁₋₁₂-alkylene, and
R⁶⁵ is H or C₁₋₆-alkyl,
is allowed to react with a compound of formula (8):

HN(R⁶²-CH=CH₂)₂ (8)

wherein
R⁶² is C₁₋₁₂-alkylene,
to obtain a compound of formula (1c-2):

R^{S1}-R⁶¹-CON(R⁶²-CH=CH₂)₂ (1c-2)

wherein individual reference symbols have the same definition as described above.
Next, the compound of formula (1c-2) is allowed to react with a compound of formula (6) as defined above,
thereby obtaining a silane compound of formula (1-3):

R^{S1}-R⁶¹-CON(R^{62'}-SiR⁶³ₘR⁶⁴₃₋ₘ)₂ (1-3)

wherein
R^{62'} is C₂₋₁₄-alkylene, and
the other reference symbols have the same definition as described above.

As another method, a compound of formula (1b-1):

R^{S1}-R⁶¹-COOR⁶⁵ (1b-1)

wherein
R^{S1} has the same definition as for R^{S1} in formula (1), and R⁶¹ is C₁₋₁₂-alkylene, and
R⁶⁵ is H or C₁₋₆-alkyl,
is allowed to react with a compound of the following formula:

M-R⁶²-CH=CH₂

wherein
M is a metal-containing group, such as Li, halogen-Mg, or Zn, and
R⁶² is C₁₋₁₂-alkylene,
to obtain a compound of formula (1d-2):

R^{S1}-R⁶¹-C(OH)(R⁶²-CH=CH₂)₂ (1d-2)

wherein individual reference symbols have the same definition as described above.
Next, the compound of formula (1d-2) is allowed to react with a compound of formula (6) as defined above,
thereby obtaining a silane compound of formula (1-4):

R^{S1}-R⁶¹-C(OH)(R^{62'}-SiR⁶³ₘR⁶⁴₃₋ₘ)₂ (1-4)

wherein
R^{62'} is C₂₋₁₄-alkylene, and
the other individual reference symbols have the same definition as described above.

As another method, a compound of formula (1d-2):

R^{S1}-R⁶¹-C(OH)(R⁶²-CH=CH₂)₂ (1d-2)

wherein individual reference symbols have the same definition as described above,
is allowed to react with an olefinating material, such as a compound represented by the following:

R⁶⁹-R⁶⁸-CH=CH₂

wherein
R⁶⁸ is C₁₋₁₂-alkylene, and
R⁶⁹ is halogen such as F, Cl, Br or I, preferably Br, to obtain a compound of formula (1e-1):

   R^{S1}-R⁶¹-C(OR⁶⁸-CH=CH₂)(R⁶²-CH=CH₂)₂ (1e-1)
wherein individual reference symbols have the same definition as described above.
Next, the compound of formula (1e-1) is allowed to react with a compound of formula (6) as defined above,
thereby obtaining a silane compound of (1-5):

R^{S1}-R⁶¹-C(OR^{62'}-SiR⁶³ₘR⁶⁴₃₋ₘ) (R^{62'}-SiR⁶³ₘR⁶⁴₃₋ₘ)₂ (1-5)

wherein
R^{62'} is each independently C₂₋₁₄-alkylene, and
the other individual reference symbols have the same definition as described above.

As another method, a compound of formula (1d-2):

R^{S1}-R⁶¹-C(OH)(R⁶²-CH=CH₂)₂ (1d-2)

wherein individual reference symbols have the same definition as described above,
is allowed to react with a polyether group-introducing agent, such as a compound of the following formula:

R⁷⁸-R⁷⁵-(OR⁷⁶)ₓ-R⁷⁷

wherein
R⁷⁵ is C₁₋₆-alkylene,
R⁷⁶ is C₁₋₆-alkylene,
R⁷⁷ is H, OH, or C₁₋₆-alkyl,
R⁷⁸ is halogen such as F, Cl, Br or I, preferably Cl, and
x is an integer of 0-20,
to obtain a compound of formula (1f-1):

R^{S1}-R⁶¹-C(OR⁷⁹)(R⁶²-CH=CH₂)₂ (1d-2)

wherein
R⁷⁹ is -R⁷⁵-(OR⁷⁶)ₓ-R⁷⁷, and
the other individual reference symbols have the same definition as described above.
Next, the compound of formula (1f-1) is allowed to react with a compound of formula (6) as defined above,
thereby obtaining a silane compound of formula (1-6):

R^{S1}-R⁶¹-C(OR⁷⁹)(R^{62'}-SiR⁶³ₘR⁶⁴₃₋ₘ)₂ (1-6)

wherein
R^{62'} is each independently C₂₋₁₄-alkylene, and
the other individual reference symbols have the same definition as described above.

Next, the present surface-treating agent will now be described.

The present surface-treating agent contains at least one silane compound of formula (1).

In one embodiment, the content of the compound of formula (1) is preferably 0.1-50.0 mass%, more preferably 1.0-30.0 mass%, still more preferably 5.0-25.0 mass%, and particularly preferably 10.0-20.0 mass% based on the entirety of the surface-treating agent.

In another embodiment, the content of the compound of formula (1) is preferably 0.001-30 mass%, more preferably 0.01-10 mass%, still more preferably 0.05-5 mass%, and particularly preferably 0.05-2 mass% based on the entirety of the surface-treating agent.

In one embodiment, the present surface-treating agent contains at least one of the present silane compound and a condensed product in which at least a portion of the present silane compound is condensed.

The present surface-treating agent may contain e.g. a solvent, a (non-reactive) silicone compound that may be understood as a silicone oil (hereinafter, referred to as "silicone oil"), an amine compound, an alcohol, a catalyst, a surfactant, a polymerization inhibitor, and a sensitizer.

Examples of the solvent include: aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; ethers such as cyclopentyl methyl ether; siloxanes such as hexamethyldisiloxane, hexaethyldisiloxane, octamethyltrisiloxane, octamethylcyclotetrasiloxane, and decamethylcyclopentasiloxane; and fluorine-containing solvents such as 1,1,2-trichloro-1,2,2-trifluoroethane, 1,2-dichloro-1,1,2,2-tetrafluoroethane, dimethyl sulfoxide, 1,1-dichloro-1,2,2,3,3-pentafluoropropane (HCFC 225), ZEORORA H, 1,3-bis(trifluoromethyl)benzene, HFE 7100, HFE 7200, HFE 7300, CF₃CH₂OH, CF₃CF₂CH₂OH, and (CF₃)₂CHOH. Alternatively, the solvent may be a mixed solvent of two or more of such solvents.

The silicone oil is not limited, and examples thereof include a compound of formula (3a):

R^{1a}- (SiR^{3a}₂-O)ₐ₁-SiR^{3a}₂-R^{1a} ... (3a)

wherein
R^{1a} is each independently H or a hydrocarbon group,
R^{3a} is each independently H or a hydrocarbon group, and
a1 is 2-3,000.

R^{3a} is each independently H or a hydrocarbon group. Such a hydrocarbon group is optionally substituted.

R^{3a} is, each independently, preferably an unsubstituted hydrocarbon group or a hydrocarbon group substituted with a halogen atom. Such a halogen atom is preferably F.

R^{3a} is, each independently, preferably C₁₋₆-alkyl or aryl optionally substituted with a halogen atom, and more preferably C₁₋₆-alkyl or aryl.

The C₁₋₆-alkyl may be linear or branched, and is preferably linear. The C₁₋₆-alkyl is preferably C₁₋₃-alkyl, and more preferably methyl.

The aryl is preferably phenyl.

In one embodiment, R^{3a} is each independently C₁₋₆-alkyl, preferably C₁₋₃-alkyl, and more preferably methyl.

In another embodiment, R^{3a} is phenyl.

In another embodiment, R^{3a} is methyl or phenyl, preferably methyl.

R^{1a} is each independently H or a hydrocarbon group, and has the same definition as for R^{3a}.

R^{1a} is, each independently, preferably C₁₋₆-alkyl or aryl optionally substituted with a halogen atom, and more preferably C₁₋₆-alkyl or aryl.

In one embodiment, R^{1a} is each independently C₁₋₆-alkyl, preferably C₁₋₃-alkyl, and more preferably methyl.

In another embodiment, R^{1a} is phenyl.

In another embodiment, R^{1a} is methyl or phenyl, preferably methyl.

a1 is 2-1,500. a1 may be preferably 5 or more, more preferably 10 or more, and still more preferably 15 or more, such as 30 or more or 50 or more. a1 may be preferably 1,000 or less, more preferably 500 or less, still more preferably 200 or less, and even more preferably 150 or less, such as 100 or less or 80 or less.

a1 may be preferably 5-1,000, more preferably 10-500, still more preferably 15-200, and even more preferably 15-150.

Examples of another silicone oil include a compound of formula (3b):

R^{1a}-R^{S2}-R^{3a} ... (3b)

wherein
R^{1a} is each independently a hydrocarbon group,
R^{3a} is each independently a hydrocarbon group, and
R^{S2} has the same definition as described for the formula (2).

The silicone oil may have an average molecular weight of 500-1,000,000, preferably 1,000-100,000. The molecular weight of the silicone oil may be measured using GPC.

As the silicone oil, a linear or cyclic silicone oil in which a1 in -(SiR^{3a}₂-O)ₐ₁- is 30 or less can be used, for example. The linear silicone oil may be a so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, or alcohol. Examples of the cyclic silicone oil include cyclic dimethylsiloxane oil.

The silicone oil may be contained in an amount of, for example, 0-50 mass%, preferably 0.001-30 mass%, and more preferably 0.1-5 mass% based on the present surface-treating agent.

In the present surface-treating agent, such a silicone oil may be contained in an amount of, for example, 0-300 parts by mass (pbm), preferably 0-100 pbm, more preferably 0-50 pbm, and still more preferably 0-10 pbm, based on 100 pbm in total of the present silane compound (in the case of two or more kinds, the total thereof, and the same applies below).

The silicone oil contributes to improving the surface lubricity of the surface-treating layer.

Examples of the alcohol include C₁₋₆-alcohols optionally substituted with one or more F, such as methanol, ethanol, iso-propanol, tert-butanol, CF₃CH₂OH, CF₃CF₂CH₂OH, and (CF₃)₂CHOH. Such an alcohol added to the surface-treating agent improves the stability of the surface-treating agent and improves the miscibility between the persilane compound and the solvent.

Examples of the catalyst include acids (for example, acetic acid, hydrochloric acid, nitric acid, sulfuric acid, phosphoric acid, sulfonic acid, p-toluenesulfonic acid, and trifluoroacetic acid), bases (for example, sodium hydroxide, potassium hydroxide, ammonia, triethylamine, and diethylamine), transition metals (for example, Ti, Ni, Sn, Zr, Al, B, Si, Ta, Nb, Mo, W, Cr, Hf, and V), and sulfur-containing compounds or nitrogen-containing compounds having an unshared electron pair in the molecular structure (for example, sulfoxide compounds, aliphatic amine compounds, aromatic amine compounds, phosphoric acid amide compounds, amide compounds, and urea compounds).

Examples of the aliphatic amine compounds may include diethylamine and triethylamine. Examples of the aromatic amine compounds may include aniline and pyridine.

In a preferred embodiment, the transition metal is contained as a transition metal compound represented by M-R, wherein M is a transition metal atom and R is a hydrolyzable group. By making the transition metal compound a compound in which a transition metal and a hydrolyzable group are bonded, the transition metal atom can be contained in the surface-treating layer more efficiently, and the friction durability and chemical resistance of the surface-treating layer can be further improved.

The hydrolyzable group means a group that can undergo a hydrolysis reaction in the same manner as the hydrolyzable group with respect to the silane compound, that is, means a group that can be removed from the transition metal atom by a hydrolysis reaction. Examples of the hydrolyzable group include -OR^{m}, -OCOR^{m}, -O-N=CR^{m}₂, -NR^{m}₂, -NHR^{m}, -NCO, and a halogen (in these formulae, R^{m} represents a substituted or unsubstituted C₁₋₄ alkyl group).

In a preferred embodiment, the hydrolyzable group is - OR^{m}, preferably methoxy or ethoxy. By using an alkoxy group as the hydrolyzable group, the transition metal atom can be contained in the surface-treating layer more efficiently, and the friction durability and chemical resistance of the surface-treating layer can be further improved.

In one embodiment, the hydrolyzable group may be the same as the hydrolyzable group contained in the silane compound described above. By making the hydrolyzable groups in the silane compound and in the transition metal compound the same group, even when such hydrolyzable groups are mutually exchanged, its effect can be minimized.

In another embodiment, the hydrolyzable group may be different from the hydrolyzable group contained in the silane compound described above. By making the hydrolyzable groups in the silane compound and in the transition metal compound different, the reactivity of hydrolysis can be controlled.

In one embodiment, the hydrolyzable group and the hydrolyzable group contained in the silane compound may be mutually interchanged in the surface-treating agent.

In a preferred embodiment, the transition metal compound is Ta(OR^{m})₅, and may be preferably Ta(OCH₂CH₃)₅.

The catalyst may be contained in an amount of, for example, 0.0002 mass% or more based on the entirety of the surface-treating agent. The catalyst may be contained in an amount of preferably 0.02 mass% or more, and more preferably 0.04 mass% or more, based on the entirety of the surface-treating agent. The catalyst may be contained in an amount of, for example, 10 mass% or less based on the entirety of the surface-treating agent, and in particular, it is contained in an amount of 1 mass% or less. The present surface-treating agent can contribute to the formation of a surface-treating layer with better durability when the catalyst is contained in the concentration as described above.

The content of the catalyst is preferably 0-10 mass%, more preferably 0-5 mass%, and particularly preferably 0-1 mass%, based on the present silane compound.

The catalyst promotes hydrolysis and dehydrative condensation of the present silane compound, and promotes formation of a layer formed of the present surface-treating agent.

Examples of other components include, in addition to those described above, tetraethoxysilane, methyltrimethoxysilane, 3-aminopropyltrimethoxysilane, 3-glycidoxypropyltrimethoxysilane, and methyltriacetoxysilane.

The present surface-treating agent may contain, in addition to the components described above, trace amounts of e.g. Pt, Rh, Ru, 1,3-divinyltetramethyldisiloxane, triphenylphosphine, NaCl, KCl, and silane condensation product as impurities.

In one embodiment, the present surface-treating agent is for a dry coating method, preferably for vacuum deposition.

In one embodiment, the present surface-treating agent is for a wet coating method, preferably for dip coating.

The present surface-treating agent can be formed into pellets by impregnating a porous material such as a porous ceramic material or a metal fiber such as a fiber obtained by, for example, solidifying steel wool in a cotton-like form therewith. Such pellets can be used in, for example, vacuum deposition.

Hereinafter, the present article will be described.

The present article comprises a substrate and a layer (surface-treating layer) on the substrate surface, the layer being formed of the present surface-treating agent.

The substrate usable in the present invention may be composed of any suitable material such as glass, resin (which may be natural or synthetic resin such as a commonly used plastic material), metal, ceramics, semiconductors (such as silicon and germanium), fiber (such as woven fabric and nonwoven fabric), fur, leather, wood, pottery, stone, building materials, and sanitary articles.

For example, when the article to be produced is an optical member, the material constituting the surface of the substrate may be a material for an optical member, such as glass or a transparent plastic. When the article to be produced is an optical member, some layer (or film), such as a hard coat layer or an antireflection layer, may be formed on the surface (the outermost layer) of the substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, Ta₃O₅, Nb₂O₅, HfO₂, Si₃N₄, CeO₂, MgO, Y₂O₃, SnO₂, MgF₂, and WO₃. One of these inorganic substances may be used singly, or two or more kinds thereof may be used in combination (for example, as a mixture). In the case of a multi-layer antireflection layer, it is preferable to use SiO₂ and/or SiO for the outermost layer thereof. When the article to be produced is an optical glass component for a touch panel, a part of the surface of the substrate (glass) may have a transparent electrode such as a thin film in which indium tin oxide (ITO) or indium zinc oxide is used. The substrate, according to its specific configuration, may have e.g. an insulating layer, an adhesive layer, a protecting layer, a decorated frame layer (I-CON), an atomizing film layer, a hard coating layer, a polarizing film, a phase difference film, or a liquid crystal display module.

The shape of the substrate is not limited, and may be, for example, in the form of a plate or a film. The surface region of the substrate on which a surface-treating layer is to be formed may be at least a portion of the substrate surface, and may be suitably determined according to e.g. the application and specific configuration of an article to be produced.

In one embodiment, the substrate, or at least the surface portion thereof, may be composed of a material originally having OH. Examples of the material include glass, as well as metal (in particular, base metal) where a natural oxidized film or a thermal oxidized film is formed on the surface, ceramics, and semiconductors. Alternatively, when the substrate has an insufficient amount of hydroxyl groups or when the substrate originally has no hydroxyl group as in resin, a pre-treatment may be performed on the substrate to thereby introduce or increase hydroxyl groups on the surface of the substrate. Examples of such a pre-treatment include a plasma treatment (for example, corona discharge) and ion beam irradiation. The plasma treatment can be suitably utilized to not only introduce or increase hydroxyl groups on the substrate surface, but also clean the substrate surface (e.g. remove foreign matter). Another example of such a pre-treatment is a method wherein a monolayer of a surface adsorbent having a carbon-carbon unsaturated bonding group is formed on the surface of the substrate by e.g. a LB method (a Langmuir-Blodgett method) or a chemical adsorption method beforehand, and thereafter cleaving the unsaturated bond under an atmosphere containing e.g. oxygen or nitrogen.

In another embodiment, the substrate, or at least the surface portion thereof, may be composed of a material comprising another reactive group such as a silicone compound having one or more Si-H group or alkoxysilane.

In a preferred embodiment, the substrate is glass. As the glass, sapphire glass, soda-lime glass, alkali aluminosilicate glass, borosilicate glass, alkali-free glass, crystal glass, and quartz glass are preferred, and chemically tempered soda-lime glass, chemically tempered alkali aluminosilicate glass, and chemically bonded borosilicate glass are particularly preferred.

The present article can be produced by forming a layer of the present surface-treating agent on the surface of the substrate and post-treating this layer as necessary, thereby forming a layer from the present surface-treating agent.

The layer of the present surface-treating agent can be formed by applying the surface-treating agent on the surface of the substrate such that the surface-treating agent coats the surface. The coating method is not limited. For example, a wet coating method and a dry coating method can be used.

Examples of the wet coating method include dip coating, spin coating, flow coating, spray coating, roll coating, gravure coating, wipe coating, squeegee coat method, die coat, inkjet, cast method, Langmuir-Blodgett method, and similar methods.

Examples of the dry coating method include deposition (usually, vacuum deposition), sputtering, CVD, and similar methods. Specific examples of the deposition method (usually, a vacuum deposition method) include resistive heating, highfrequency heating using electron beam or microwave, , and ion beam. Specific examples of the CVD method include plasma-CVD, optical CVD, and thermal CVD.

Furthermore, coating by an atmospheric pressure plasma method can be performed.

When using the wet coating method, the present surface-treating agent can be applied to the substrate surface after being diluted with a solvent. From the viewpoint of the stability of the present composition and the volatility of the solvent, the following solvents are preferably used: aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), and 1,1,2,2,3,3,4-heptafluorocyclopentane (for example, Zeorolla(R) H manufactured by ZEON Corporation); ether alcohols such as hydrofluoroethers (HFE) (for example, alkyl perfluoroalkyl ethers (the perfluoroalkyl group and the alkyl group may be linear or branched), such as perfluoropropyl methyl ether (C₃F₇OCH₃) (for example, Novec(TM) 7000 manufactured by SUMITOMO 3M), perfluorobutyl methyl ether (C₄F₉OCH₃) (for example, Novec(TM) 7100 manufactured by SUMITOMO 3M), perfluorobutyl ethyl ether (C₄F₉OC₂H₅) (for example, Novec(TM) 7200 manufactured by SUMITOMO 3M), and perfluorohexyl methyl ether (C₂F₅CF(OCH₃)C₃F₇) (for example, Novec(TM) 7300 manufactured by SUMITOMO 3M), or CF₃CH₂OCF₂CHF₂ (for example, ASAHIKLIN (R) AE-3000 manufactured by AGC Inc.)) and cyclopentyl methyl ether; and siloxanes such as hexamethyldisiloxane, hexaethyldisiloxane, octamethyltrisiloxane, octamethylcyclotetrasiloxane, and octamethylcyclopentasiloxane. One of these solvents may be used singly, or two or more may be used as a mixture. In particular, hydrofluoroether is preferred, and perfluorobutyl methyl ether (C₄F₉OCH₃) and/or perfluorobutyl ethyl ether (C₄F₉OC₂H₅) is particularly preferred.

When using the dry coating method, the present surface-treating agent may be directly subjected to the dry coating method, or may be diluted with the solvent before being subjected to the dry coating method.

A layer of the surface-treating agent is preferably formed such that the present surface-treating agent coexists in the layer with a catalyst for hydrolysis and dehydration condensation. Conveniently, in the case of a wet coating method, the present surface-treating agent is diluted with a solvent, and then, immediately before application to the substrate surface, a catalyst may be added to the diluted solution of the present surface-treating agent. In the case of a dry coating method, the present surface-treating agent to which a catalyst has been added is directly used to a deposition (usually vacuum deposition) treatment, or a pellet-like material may be used to a deposition (usually vacuum deposition) treatment, wherein the pellets are obtained by impregnating a porous body of metal such as iron or copper with the present surface-treating agent to which the catalyst has been added.

As the catalyst, e.g. any appropriate acids or bases, transition metals (such as Ti, Ni, Sn, Zr, Al, and B), and sulfur-containing compounds or nitrogen-containing compounds having an unshared electron pair in the molecular structure (such as sulfoxide compounds, aliphatic amine compounds, aromatic amine compounds, phosphoric acid amide compounds, amide compounds, and urea compounds) can be used. As the acid catalyst, for example, acetic acid, formic acid, trifluoroacetic acid, hydrochloric acid, nitric acid, sulfuric acid, phosphoric acid, sulfonic acid, methanesulfonic acid, and p-toluenesulfonic acid can be used. Also, as the base catalyst, for example, ammonia, sodium hydroxide, potassium hydroxide, and organic amines such as triethylamine and diethylamine can be used. Examples of the transition metals, aliphatic amine compounds, and aromatic amine compounds include the same as those described above.

The surface-treating layer contained in the present article has both high abrasion durability. In addition, the surface-treating layer may have not only high abrasion durability, but also have, depending on the compositional features of the surface-treating agent used, water-repellency, oil-repellency, antifouling property (for example, preventing fouling such as fingerprints from adhering), waterproof property (e.g. preventing water from penetrating into electronic components), surface lubricity (or lubricity, such as wiping property for fouling including fingerprints and excellent tactile sensations to the fingers), and chemical resistance, and may be suitably utilized as a functional thin film.

Therefore, the present invention further relates to an optical material having the surface-treating layer in the outermost layer.

The optical material preferably includes a wide variety of optical materials, in addition to optical materials relating to e.g. displays as exemplified below: for example, displays such as cathode ray tubes (CRTs; for example, PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The present article may be, but is not limited to, an optical member. Examples of the optical member include lenses of glasses; front surface protective plates, antireflection plates, polarizing plates, and anti-glare plates for displays such as PDPs and LCDs; touch panel sheets for equipment such as cell phones and portable information terminals; disc surfaces of optical discs such as Blu-ray(R) discs, DVD discs, CD-Rs, and MOs; optical fibers; and display surfaces of watches and clocks.

The present article may be medical equipment or a medical material. The article having a layer that is obtained according to the present invention may be an automobile interior or exterior member. Examples of the exterior material include the following: windows, light covers, and external camera covers. Examples of the interior material include the following: instrument panel covers, navigation system touch panels, and decorative interior materials.

The thickness of the layer is not limited. The thickness of the layer in the case of an optical member is in the range of 1-50 nm, 1-30 nm, and preferably 1-15 nm, from the viewpoint of optical performance, abrasion durability, and antifouling property.

### Examples

Hereinafter, the present invention will be described with reference to the following Examples.

### (Synthetic Example 0)

To a glass vessel, 1,1-dimethylsilacyclobutane (3.75 g), THF (3.75 g), and n-hexane (3.75 g) were added. This reaction solution was cooled to -50°C, a n-butyl lithium/hexane solution (1.82 mL) was added, and a polymerization reaction was performed by stirring for 1 hour. Thereafter, allylchlorodimethylsilane (0.52 g) was added, and the mixture was stirred at the same temperature for 30 minutes. The temperature of the resulting reaction solution was raised to room temperature, water and toluene were added, the mixture was subjected to separatory extraction, and the organic layer was dried over sodium sulfate. After filtration, the filtrate was concentrated and dried to afford the following polysilalkylene group-containing compound (A): CH₃CH₂CH₂CH₂(Si(CH₃)₂CH₂CH₂CH₂)ₙSi(CH₃)₂CH₂CH=CH₂ (3.84 g, Mw: 4,468, Mw/Mn: 1.43). 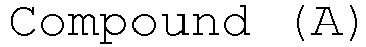 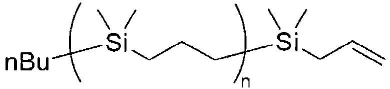 ¹H NMR (C₆D₆, 400 MHz) δ [ppm] : 0.01-0.14 (m), 0.04-0.15 (m), 0.47-0.56 (m), 0.56-0.85 (m), 0.88-0.97 (m), 1.23-1.40 (m), 1.41-1.58 (m), 1.59-1.71 (m), 4.82-5.00 (m), 5.69-5.89 (m).

### (Examples)

### (Synthetic Example 1)

First, 1.51 g of the compound (A) obtained in Synthetic Example 0, CH₃CH₂CH₂CH₂(Si(CH₃)₂CH₂CH₂CH₂)ₙSi(CH₃)₂CH₂CH=CH₂, 1.5 mL of toluene, 0.023 g of triacetoxymethylsilane, and 0.1 mL of a xylene solution containing 2% Pt complex of 1,3-divinyl-1,1,3,3-tetramethyldisiloxane were each added, then 0.4 mL of trichlorosilane was introduced, and the mixture was heated to 60°C and stirred for 3 hours. Thereafter, the volatile substances were distilled off under reduced pressure, 1.2 mL of toluene was then added, the mixture was cooled to 5°C or lower in an ice bath, 4 mL of allylmagnesium chloride (tetrahydrofuran solution, about 1.0 mol/L) was added, and the mixture was stirred at room temperature for a whole day and night. Thereafter, purification was performed, thereby obtaining 1.25 g of the following polysilalkylene group-containing compound (B): CH₃CH₂CH₂CH₂(Si(CH₃)₂CH₂CH₂CH₂)ₙSi(CH₃)₂CH₂CH₂CH₂Si(CH₂CH=CH₂)₃. 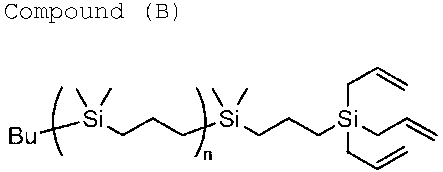 (n ≈ 50)
¹H NMR (CDCl₃, 400 MHz) δ [ppm] : -0.209-0.166 (m), 0.371-0.739 (m), 0.861-0.989 (m), 1.211-1.403 (m), 1.432-1.722 (m), 4.799-5.090 (m), 5.723-5.832 (m)

### (Synthetic Example 2)

First, 1.22 g of the polysilalkylene group-containing compound (B) obtained in Synthetic Example 1, CH₃CH₂CH₂CH₂(Si(CH₃)₂CH₂CH₂CH₂)ₙSi(CH₃)₂CH₂CH₂CH₂Si(CH₂CH=CH₂)₃, 1.2 mL of toluene, 0.015 g of triacetoxymethylsilane, and 0.084 g of a xylene solution containing 2% Pt complex of 1,3-divinyl-1,1,3,3-tetramethyldisiloxane were each added, then 0.4 mL of trichlorosilane was introduced, and the mixture was heated to 60°C and stirred for 3 hours. Thereafter, the volatile substances were distilled off under reduced pressure, 1.2 mL of toluene was then added, a mixed solution of 0.06 g of methanol and 1.24 g of trimethyl orthoformate was added, and the mixture was then heated to 50°C and stirred for 3 hours. Thereafter, purification was performed, thereby obtaining 1.19 g of the following polysilalkylene group-containing compound (C): CH₃CH₂CH₂CH₂(Si(CH₃)₂CH₂CH₂CH₂)ₙSi(CH₃)₂CH₂CH₂CH₂Si(CH₂CH₂CH₂Si(O CH₃)₃)₃, which has trimethoxysilyl groups at an end.

### Polysilalkylene group-containing compound (C)

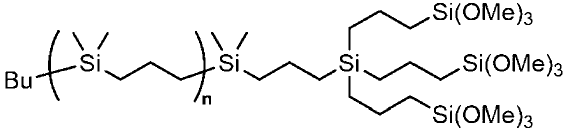

(n ≈ 50)
¹H NMR (CDCl₃, 400 MHz) δ [ppm]: -0.211-0.090 (m), 0.368-0.607 (m), 0.645-0.734 (m), 0.859-0.894 (t), 0.928-0.965 (t), 1.109-1.386 (m), 1.418-1.677 (m), 3.421-3.760 (m)

### (Synthetic Example 3)

First, 5 g of 1,2-bis(chlorodimethylsilyl)ethane, 1.5 mL of toluene, and 0.84 mL of water were each added, and a polycondensation reaction was then performed by heating the mixture to 100°C and stirring it for 8 hours. After performing purification, 3.13 g of allylchlorodimethylsilane and 2.76 g of pyridine were added, and the mixture was stirred at room temperature for 30 minutes. The resulting reaction solution was concentrated under reduced pressure and washed with acetonitrile, thereby obtaining 3.5 g of the following polysilalkylenesiloxane group-containing compound (D) :

CH₂=CHCH₂(CH₃)₂SiO(Si(CH₃)₂CH₂CH₂Si(CH₃)₂O)ₙSi(CH₃)₂CH₂CH=CH₂.

### Polysilalkylenesiloxane group-containing compound (D)

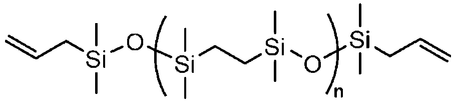

(n ≈ 25)
¹H NMR (CDCl₃, 400 MHz) δ [ppm] : -0.094-0.292 (m), 0.346-0.788 (m), 1.533-1.573 (d), 4.837-4.905 (m), 5.738-5.846 (m)

### (Synthetic Example 4)

First, 2.0 g of the polysilalkylenesiloxane group-containing compound (D) obtained in Synthetic Example 3, CH₂=CHCH₂(CH₃)₂SiO(Si(CH₃)₂CH₂CH₂Si(CH₃)₂O)ₙSi(CH₃)₂CH₂CH=CH₂, 2.0 mL of toluene, 0.013 g of triacetoxymethylsilane, and 0.1 mL of a xylene solution containing 2% Pt complex of 1,3-divinyl-1,1,3,3-tetramethyldisiloxane were each added, then 0.4 mL of trichlorosilane was introduced, and the mixture was heated to 60°C and stirred for 3 hours. Thereafter, the volatile substances were distilled off under reduced pressure, 2.0 mL of toluene was then added, the mixture was cooled to 5°C or lower in an ice bath, 8.0 mL of allylmagnesium chloride (tetrahydrofuran solution, about 1.0 mol/L) was added, and the mixture was stirred at room temperature for a whole day and night. Thereafter, purification was performed, thereby obtaining 2.00 g of the following polysilalkylenesiloxane group-containing compound (E):

(CH₂=CHCH₂)₃SiCH₂CH₂CH₂(CH₃)₂SiO(Si(CH₃)₂CH₂CH₂Si(CH₃)₂O)ₙSi(CH₃ )₂CH₂CH₂CH₂Si(CH₂CH=CH₂)₃.

### Polysilalkylenesiloxane group-containing compound (E)

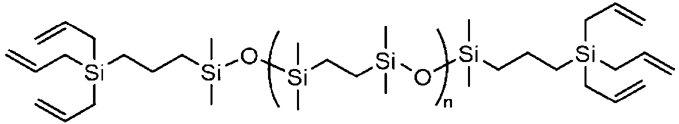

(n ≈ 25)
¹H NMR (CDCl₃, 400 MHz) δ [ppm] : -0.114-0.263 (m), 0.393-0.415 (m), 0.585-0.678 (m), 1.255-1.434 (m), 1.535-1.593 (m), 4.842-5.037 (m), 5.734-5.837 (m)

### (Synthetic Example 5)

First, 1.97 g of the polysilalkylenesiloxane group-containing compound (E) obtained in Synthetic Example 4, (CH₂=CHCH₂)₃SiCH₂CH₂CH₂(CH₃)₂SiO(Si(CH₃)₂CH₂CH₂Si(CH₃)₂O)ₙSi(CH₃ )₂CH₂CH₂CH₂Si(CH₂CH=CH₂)₃, 1.2 ml of toluene, 0.017 g of triacetoxymethylsilane, and 0.084 g of a xylene solution containing 2% Pt complex of 1,3-divinyl-1,1,3,3-tetramethyldisiloxane were each added, then 0.4 mL of trichlorosilane was introduced, and the mixture was heated to 60°C and stirred for 3 hours. Thereafter, the volatile substances were distilled off under reduced pressure, 1.2 mL of toluene was then added, a mixed solution of 0.11 g of methanol and 1.50 g of trimethyl orthoformate was added, and the mixture was then heated to 50°C and stirred for 3 hours. Thereafter, purification was performed, thereby obtaining 2.02 g of the following polysilalkylenesiloxane group-containing compound (F): ((CH₃O)₃SiCH₂CH₂CH₂)₃SiCH₂CH₂CH₂(CH₃)₂SiO(Si(CH₃)₂CH₂CH₂Si(CH₃)₂ O)ₙSi(CH₃)₂CH₂CH₂CH₂Si(CH₂CH₂CH₂Si(OCH₃)₃)₃, which has trimethoxysilyl groups at the ends.

### Polysilalkylenesiloxane group-containing compound (F)

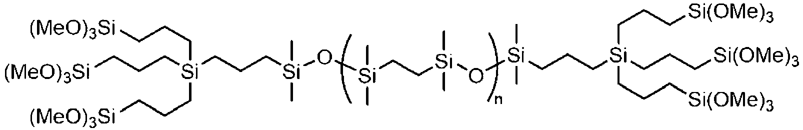

(n ≈ 25)
¹H NMR (CDCl₃, 400 MHz) δ [ppm]: -0.122-0.174 (m), 0.313-0.440 (m), 0.472-0.744(m), 0.855-1.030 (m), 1.247-1.701 (m), 3.421-3.474 (m), 3.497-3.641 (m)

### (Synthetic Example 6)

First, 0.085 g of triethylsilanol, 0.049 g of 1,5,7-triazabicyclo[4.4.0]dec-5-ene, and 15.6 mL of tetrahydrofuran were each added, then 5.02 g of 2,2,5,5-tetramethyl-1,2,5-oxadisilolane was introduced, and the mixture was stirred at 30°C for 3 hours. 0.11 g of benzoic acid was added, purification was performed, 5 mL of THF was then added, 0.94 mL of allylchlorodimethylsilane and 0.81 mL of pyridine were added, and the mixture was stirred at 30°C for 15 minutes. The resulting reaction solution was concentrated under reduced pressure and washed with acetonitrile, thereby obtaining 3.84 g of the following polysilalkylenesiloxane group-containing compound (G): (CH₃CH₂)₃SiO(Si(CH₃)₂CH₂CH₂Si(CH₃)₂O)ₙSi(CH₃)₂CH₂CH=CH₂.

### Polysilalkylenesiloxane group-containing compound (G)

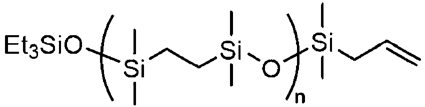

(n ≈ 32)
¹H NMR (CDCl₃, 400 MHz) δ [ppm]: 0.004-0.277 (m), 0.332-0.575 (m), 0.911-0.950 (t), 1.542-1.590 (m), 4.800-4.895 (m), 5.730-5.838 (m)

### (Synthetic Example 7)

First, 2.01 g of the polysilalkylenesiloxane group-containing compound (G) obtained in Synthetic Example 6, (CH₃CH₂)₃SiO(Si(CH₃)₂CH₂CH₂Si(CH₃)₂O)ₙSi(CH₃)₂CH₂CH=CH₂, 2.0 mL of toluene, 0.013 g of triacetoxymethylsilane, and 0.075 g of a xylene solution containing 2% Pt complex of 1,3-divinyl-1,1,3,3-tetramethyldisiloxane were each added, then 0.5 mL of trichlorosilane was introduced, and the mixture was heated to 60°C and stirred for 3 hours. Thereafter, the volatile substances were distilled off under reduced pressure, then 2.0 mL of toluene was added, the mixture was cooled to 5°C or lower in an ice bath, 8.0 mL of allylmagnesium chloride (tetrahydrofuran solution, about 1.0 mol/L) was added, and the mixture was stirred at room temperature for a whole day and night. Thereafter, purification was performed, thereby obtaining 1.95 g of the following polysilalkylenesiloxane group-containing compound (H): (CH₃CH₂)₃SiO(Si(CH₃)₂CH₂CH₂Si(CH₃)₂O)ₙSi(CH₃)₂CH₂CH₂CH₂Si(CH₂CH= CH₂)₃.

### Polysilalkylenesiloxane group-containing compound (H)

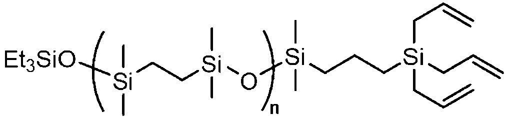

(n ≈ 32)
¹H NMR (CDCl₃, 400 MHz) δ [ppm]: -0.115-0.185 (m), 0.321-0.678 (m), 0.903-0.942 (t), 1.255-1.432 (m), 1.511-1.677 (m), 4.797-4.902 (m), 5.727-5.841 (m)

### (Synthetic Example 8)

First, 1.91 g of the polysilalkylenesiloxane group-containing compound (H) obtained in Synthetic Example 7, (CH₃CH₂)₃SiO(Si(CH₃)₂CH₂CH₂Si(CH₃)₂O)ₙSi(CH₃)₂CH₂CH₂CH₂Si(CH₂CH= CH₂)₃, 2.0 ml of toluene, 0.0098 g of triacetoxymethylsilane, and 0.17 g of a xylene solution containing 2% Pt complex of 1,3-divinyl-1,1,3,3-tetramethyldisiloxane were each added, then 0.5 mL of trichlorosilane was introduced, and the mixture was heated to 60°C and stirred for 3 hours. Thereafter, the volatile substances were distilled off under reduced pressure, 2.0 mL of toluene was then added, a mixed solution of 0.11 g of methanol and 2.37 g of trimethyl orthoformate was added, and the mixture was then heated to 50°C and stirred for 3 hours. Thereafter, purification was performed, thereby obtaining 2.06 g of the following polysilalkylenesiloxane group-containing compound (I): (CH₃CH₂)₃SiO(Si(CH₃)₂CH₂CH₂Si(CH₃)₂O)ₙSi(CH₃)₂CH₂CH₂CH₂Si(CH₂CH₂ CH₂Si(OCH₃)₃)₃, which has trimethoxysilyl groups at an end.

### Polysilalkylenesiloxane group-containing compound (I)

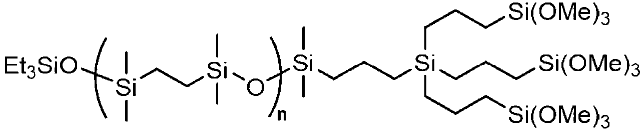

(n ≈ 32)
¹H NMR (CDCl₃, 400 MHz) δ [ppm]: -0.117-0.182 (m), 0.322-0.750 (m), 0.901-0.941 (t), 1.227-1.621 (m), 3.376-3.646 (m)

### (Synthetic Example 9)

To a glass sealed reaction vessel, Karstedt's catalyst (44.9 mg), methyl 4-pentenoate (9.93 g), and chlorodimethylsilane (10.09 g) were added, and the mixture was stirred at 50°C for 5 minutes. The resulting reaction solution was distilled under reduced pressure of 700-800 Pa to afford 10.5 g of the following compound (J): methyl 5-(chlorodimethylsilyl)pentanoate.

### Methyl 5-(chlorodimethylsilyl)pentanoate (J)

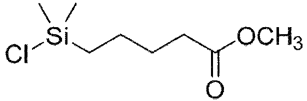

¹H NMR (CDCl₃, 400 MHz) δ [ppm]: δ 0.36 (s, 6H) , 0.78-0.82 (m, 2H) , 1.36-1.44 (m, 2H) , 1.62 (q, J=7.6Hz, 2H) , 2.26 (t, J=8.0Hz, 2H), 3.58 (s, 3H)

### (Synthetic Example 10)

First, 0.84 g of triethylsilanol, 0.22 g of 1,5,7-triazabicyclo[4.4.0]dec-5-ene, and 50 mL of tetrahydrofuran were each added, then 23.5 mL of 2,2,5,5-tetramethyl-1,2,5-oxadisilolane was introduced, and the mixture was stirred at 30°C for 3 hours. 2.96 g of pyridine and 5.21 g of methyl 5-(chlorodimethylsilyl)pentanoate obtained in Synthetic Example 9 were added, the mixture was stirred at room temperature for 12 hours, then washed with a saturated sodium bicarbonate aqueous solution, and purified by a silica gel column, thereby obtaining a compound (L): (CH₃CH₂)₃SiO(Si(CH₃)₂CH₂CH₂Si(CH₃)₂O)ₙSi(CH₃)₂CH₂CH₂CH₂CH₂COOCH₃ (3.35 g). The average value of the number of repeating units, n, is 20. 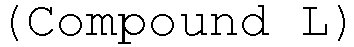 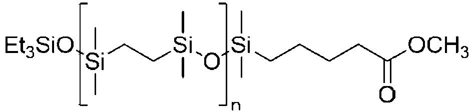 ¹H NMR (CDCl₃, 400 MHz) δ [ppm]: -0.04-0.19 (m), 0.36-0.44 (m), 0.47-0.59 (m), 0.90-94 (t), 1.30-1.44 (m), 1.61-1.69 (m), 2.29-2.34 (m), 3.66-3.67 (m)

### (Synthetic Example 11)

3.0 g of the compound (L) obtained in Synthetic Example 10, (CH₃CH₂)₃SiO(Si (CH₃)₂CH₂CH₂Si(CH₃)₂O)ₙSi(CH₃)₂CH₂CH₂CH₂CH₂COOCH₃, 6 g of tetrahydrofuran, 25 g of water, and lithium hydroxide were mixed, and the mixture was stirred at 50°C overnight. Thereafter, by washing with hydrochloric acid and concentrating under reduced pressure, (CH₃CH₂)₃SiO(Si(CH₃)₂CH₂CH₂Si(CH₃)₂O)ₙSi(CH₃)₂CH₂CH₂CH₂CH₂COOH was obtained. Subsequently, 1.28 g of 4-[2,2-di(2-propylenyl)]pentenylamine, 1.49 g of 1-(3-dimethylaminopropyl)-3-ethylcarbodiimide hydrochloride, and 6.5 g of dichloromethane were each mixed, and the mixture was stirred at room temperature overnight. Thereafter, purification was performed, thereby obtaining a compound (M) : (CH₃CH₂)₃SiO(Si(CH₃)₂CH₂CH₂Si(CH₃)₂O)ₙSi(CH₃)₂CH₂CH₂CH₂CH₂CONHCH ₂C(CH₂CH=CH₂)₃ (3.23 g). The average value of the number of repeating units, n, is 60. 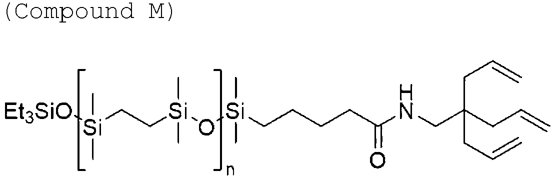 ¹H NMR (CDCl₃, 400 MHz) δ [ppm]: -0.05-0.05 (m), 0.34-0.40 (m), 0.43-0.51 (m), 0.87-0.90 (t), 1.07-1.15 (m), 1.18-1.35 (m), 1.58-1.77 (m), 2.14-2.20 (m), 2.24-2.32 (m), 5.01-5.08 (m), 5.74-5.88 (m)

### (Synthetic Example 12)

First, 1.01 g of the compound (M) obtained in Synthetic Example 11, (CH₃CH₂)₃SiO(Si(CH₃)₂CH₂CH₂Si(CH₃)₂O)ₙSi(CH₃)₂CH₂CH₂CH₂CH₂CONHCH ₂C(CH₂CH=CH₂)₃, 1.74 g of toluene, 0.05 mL of pyridine, and 0.10 g of a xylene solution of Karstedt's catalyst were each added, then 0.4 mL of trimethoxysilane was introduced, and the mixture was stirred at room temperature overnight. Thereafter, purification was performed, thereby obtaining a compound (N): (CH₃CH₂)₃SiO(Si(CH₃)₂CH₂CH₂Si(CH₃)₂O)ₙSi(CH₃)₂CH₂CH₂CH₂CH₂CONHCH ₂C(CH₂CH₂CH₂Si(OCH₃)₃)₃ (1.08 g), which has trimethoxysilyl groups at an end. 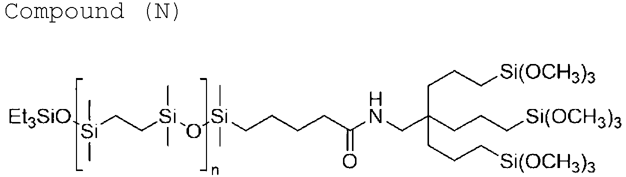 ¹H NMR (CDCl₃, 400 MHz) δ [ppm]: -0.06-0.18 (m), 0.36-0.47 (m), 0.49-0.62 (m), 0.90-0.94 (t), 1.15-1.40 (m), 1.62-1.80 (m), 2.14-2.23 (m), 3.48-3.62 (m)

### (Synthetic Example 13)

To a glass vessel, 1,1-dimethylsilacyclobutane (7.60 g), THF (7.60 g), and n-hexane (7.60 g) were added. This reaction solution was cooled to -50°C, a n-butyl lithium/hexane solution (3.69 mL) was added, and a polymerization reaction was performed by stirring for 1 hour. Thereafter, methyl 5-(chlorodimethylsilyl)pentanoate (1.64 g) was added, and the mixture was stirred at the same temperature for 30 minutes. The temperature of the obtained reaction solution was raised to room temperature, water and toluene were added, the mixture was subjected to separatory extraction, and the organic layer was dried over sodium sulfate. After filtration, the filtrate was concentrated and dried, and then purified using a silica gel column with hexane as the developing solvent, thereby obtaining the following polysilalkylene group-containing compound (P): CH₃CH₂CH₂CH₂(Si(CH₃)₂CH₂CH₂CH₂)ₙSi(CH₃)₂CH₂CH₂CH₂CH₂COOCH₃ (2.60 g, Mw: 5,652, Mw/Mn: 1.31). 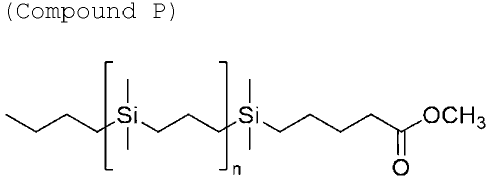 ¹H NMR (C₆D₆, 400 MHz) δ [ppm]: 0.01-0.14 (m), 0.04-0.15 (m), 0.47-0.56 (m), 0.56-0.85 (m), 0.88-0.97 (m), 1.23-1.40 (m), 1.41-1.58 (m), 1.59-1.71 (m), 2.29-2.34 (m), 3.66-3.67 (m)

### (Synthetic Example 14)

2.0 g of the compound (P) obtained in Synthetic Example 13, CH₃CH₂CH₂CH₂(Si(CH₃)₂CH₂CH₂CH₂)ₙSi(CH₃)₂CH₂CH₂CH₂CH₂COOCH₃, 2.5 g of tetrahydrofuran, 11 g of water, and lithium hydroxide were mixed, and the mixture was stirred at 50°C overnight. Thereafter, by washing with hydrochloric acid and concentrating under reduced pressure, CH₃CH₂CH₂CH₂(Si(CH₃)₂CH₂CH₂CH₂)ₙSi(CH₃)₂CH₂CH₂CH₂CH₂COOH was obtained. Subsequently, 0.53 g of 4-[2,2-di(2-propylenyl)]pentenylamine, 0.62 g of 1-(3-dimethylaminopropyl)-3-ethylcarbodiimide hydrochloride, and 2.7 g of dichloromethane were each mixed, and the mixture was stirred at room temperature overnight. Thereafter, purification was performed, thereby obtaining a compound (Q): CH₃CH₂CH₂CH₂(Si(CH₃)₂CH₂CH₂CH₂)ₙSi(CH₃)₂CH₂CH₂CH₂CH₂CONHCH₂C(CH₂C H=CH₂)₃ (2.15 g, Mw: 6,769, Mw/Mn: 1.37). 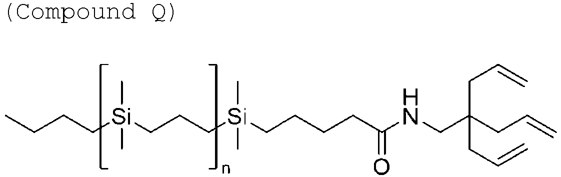 ¹H NMR (CDCl₃, 400 MHz) δ [ppm]: -0.209-0.166 (m), 0.371-0.739 (m), 0.861-0.989 (m), 1.211-1.403 (m), 1.432-1.722 (m), 2.14-2.20 (m), 2.24-2.32 (m), 5.01-5.08 (m), 5.74-5.88 (m)

### (Synthetic Example 15)

First, 2.00 g of the compound (Q) obtained in Synthetic Example 14, CH₃CH₂CH₂CH₂(Si(CH₃)₂CH₂CH₂CH₂)ₙSi(CH₃)₂CH₂CH₂CH₂CH₂CONHCH₂C(CH₂C H=CH₂)₃, 2.0 g of toluene, 0.05 mL of pyridine, and 0.11 g of a xylene solution of Karstedt's catalyst were each added, then 0.4 mL of trimethoxysilane was introduced, and the mixture was stirred at room temperature overnight. Thereafter, purification was performed, thereby obtaining a compound (R) : CH₃CH₂CH₂CH₂(Si(CH₃)₂CH₂CH₂CH₂)ₙSi(CH₃)₂CH₂CH₂CH₂CH₂CONHCH₂C(CH₂C H₂CH₂Si(OCH₃)₃)₃ (1.08 g, Mw: 7,586, Mw/Mn: 1.35), which has trimethoxysilyl groups at an end. 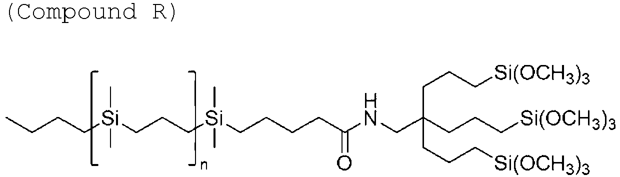 ¹H NMR (CDCl₃, 400 MHz) δ [ppm]: -0.211-0.090 (m), 0.368-0.607 (m), 0.645-0.734 (m), 0.859-0.894 (t), 0.928-0.965 (t), 1.109-1.386 (m), 1.418-1.677 (m), 2.14-2.23 (m), 3.48-3.62 (m)

### Comparative Example 1

As the comparative compound, the following compound (O) was prepared.

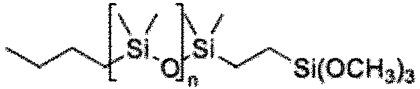

### <Formation of surface-treating layer>

The compounds (C), (F), (I), (N), and (R) obtained as described above, as well as the comparative compound (O), were diluted to a 20 wt% 1,3-bis(trifluoromethyl)benzene solution to obtain surface-treating agents 1-6. The surface-treating agents 1-6 prepared as described above were vacuum-deposited on a chemically tempered glass ("Gorilla" Glass, manufactured by Corning Incorporated, thickness 0.7 mm).

Specifically, a molybdenum boat in the vacuum deposition system was filled with 0.1 g of the surface-treating agent, and the vacuum deposition system was evacuated to a pressure of 3.0 × 10⁻³ Pa or lower. Thereafter, silicon dioxide was deposited at a thickness of 7 nm by the electron beam deposition scheme to form a silicon dioxide film, followed by heating the boat by the resistance heating scheme to form a surface-treating layer.

### <Evaluation>

### [Evaluation of abrasion resistance]

The higher the static water contact angle after the abrasion resistance test, the smaller the decrease in performance due to friction and the superior the abrasion resistance is.

### (Initial evaluation)

As initial evaluation (0 friction times), after forming the surface-treating layer, the excess on the surface was wiped off, and then the static water contact angle was measured.

### (Evaluation after abrasion resistance test)

For the formed surface-treating layer, a rubbing tester (manufactured by Imoto machinery Co., LTD.) was used to reciprocate the friction block under the following conditions. At predetermined friction times, the static water contact angle was measured. The results are shown in the table below.
Friction block: BEMCOT M-3II (product name, manufactured by Asahi Kasei Corp.)
Moving distance (one way): 60 mm
Moving speed: 8,400 mm/min
Load: 100 g/3 cm²

**[Table 1]**

| | | Water contact angle (degrees) | | |
|---|---|---|---|---|
| | Compound | Initial | 3,000 times | 6,000 times |
| Example 1 | (C) | 96.8 | 96.2 | 96.0 |
| Example 2 | (F) | 98.4 | 97.4 | 93.9 |
| Example 3 | (I) | 99.9 | 96.9 | 90.3 |
| Example 4 | (N) | 102.6 | 98.3 | 91.9 |
| Example 5 | (R) | 100.3 | 97.9 | 98.7 |
| Comparative Example 1 | (O) | 98.6 | 84.8 | 13.0 |

### Industrial Applicability

The present surface-treating agent can be suitably utilized in a variety of diverse applications.

## Claims

1. A compound, which is a silane compound of formula (1):
R¹-R^{S}-Si(R²)₂-X^{A}-R^{H} (1)
wherein, each independently at each occurrence,
R^{S} is a group of the formula: 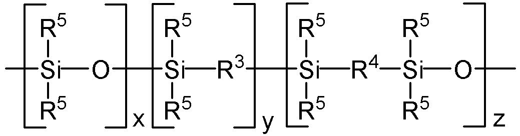
R³ is C₁₋₁₂-alkylene, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
R⁴ R⁴ is each independently a C₁₋₁₂ alkylene group, -R⁶-O-R⁶-, -R⁸-R⁷-R⁸-, -R⁸-R⁷-R⁹-R⁷-R⁸⁻, -R^{B}-R⁷-R⁹-R⁶-R⁹-R⁷-R⁸-, or -R⁹-R⁶-R⁹-R⁷-R⁹-R⁶-R⁹-,
R⁶ is C₁₋₆-alkylene,
R⁷ is optionally substituted arylene,
R⁸ is a single bond or C₁₋₆-alkylene,
R⁹ is a single bond or -O-,
R⁵ is a hydrocarbon group,
x is an integer of 0-200,
y is an integer of 0-200,
z is an integer of 0-200,
wherein (y+z) is ≥ 1, and the order of the repeating units in parentheses provided with x, y, or z is not limited,
R¹ is a hydrocarbon group,
R² is a hydrocarbon group,
R^{H} is a group of any of the formulae (S1) and (S3)-(S5): 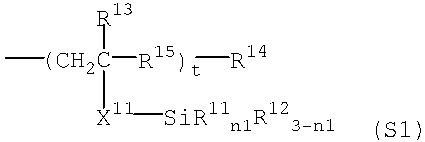
wherein, each independently
R¹¹ is OH or a hydrolyzable group,
R¹² is a monovalent organic group,
n1 is an integer of 0-3 for each (SiR¹¹ₙ₁R¹²₃₋ₙ₁) unit,
X¹¹ is a single bond or a divalent organic group,
R¹³ is H or a monovalent organic group,
t is each independently an integer of ≥ 2,
R¹⁴ is H, halogen, or -X¹¹-SiR¹¹ₙ₁R¹²₃₋ₙ₁,
R¹⁵ is a single bond, -O-, C₁₋₆-alkylene or C₁₋₆-alkyleneoxy,
-SiR^{a1}ₖ₁R^{b1}ₗ₁R^{c1}ₘ₁ (S3)
wherein, each independently,
R^{a1} is -Z¹-SiR²¹ₚ₁R²²_{q1}R²³ᵣ₁,
Z¹ is a divalent organic group,
R²¹ δ -Z^{1'}-SiR^{21'}_{p1'}R^{22'}_{q1'}R^{23'}_{r1'},
Z^{1'} is a divalent organic group,
R²¹, is -Z^{1"}-SiR²²"_{q1}"R²³"_{r1"},
Z^{1"} is a divalent organic group,
R^{22"} is OH or a hydrolyzable group,
R^{23"} is a monovalent organic group,
q1" is an integer of 0-3,
r1" is an integer of 0-3,
R^{22'} is OH or a hydrolyzable group,
R^{23'} is a monovalent organic group,
p1' is an integer of 0-3,
q1' is an integer of 0-3,
r1' is an integer of 0-3,
R²² is OH or a hydrolyzable group,
R²³ is a monovalent organic group,
p1 is an integer of 0-3,
q1 is an integer of 0-3,
r1 is an integer of 0-3,
R^{b1} is OH or a hydrolyzable group,
R^{c1} is a monovalent organic group,
k1 is an integer of 0-3,
11 is an integer of 0-3,
m1 is an integer of 0-3,
-CR^{d1}k2R^{e1}l₂R^{cf}ₘ₂ (S4)
wherein, each independently,
R^{d1} is -Z²-CR³¹ₚ₂R³²_{q2}R³³ᵣ₂,
Z² is a single bond, -O-, or a divalent organic group,
R³¹ is -Z^{2'}-CR^{32'}_{q2'}R^{33'}_{r2'},
Z^{2'} is a single bond, -O-, or a divalent organic group,
R^{32'} is -Z³-S1R³⁴ₙ₂R³⁵₃₋ₙ₂,
Z³ is a single bond, -O-, or a divalent organic group,
R³⁴ is OH or a hydrolyzable group,
R³⁵ is a monovalent organic group,
n2 is an integer of 0-3,
R^{33'} is H, OH, or a monovalent organic group,
q2' is an integer of 0-3,
r2' is an integer of 0-3,
R³² is -Z³-SiR³⁴ₙ₂R³⁵₃₋ₙ₂,
R³³ is H, OH, or a monovalent organic group,
p2 is an integer of 0-3,
q2 is an integer of 0-3,
r2 is an integer of 0-3,
R^{e1} is -Z³-SiR³⁴ₙ₂R³⁵₃₋ₙ₂,
R^{f1} is H, OH, or a monovalent organic group,
k2 is an integer of 0-3,
l2 is an integer of 0-3,
m2 is an integer of 0-3,
-NR^{g1}R^{h1} (S5)
wherein R^{g1} and R^{h1} each independently are -Z⁴-SiR¹¹ₙ₁R¹²₃₋ₙ₁, -Z⁴-SiR^{a1}ₖ₁R^{b1}ₗ₁^{Rc1}ₘ₁, or -Z⁴-CR^{d1}ₖ₂R^{e1}ₗ₂R^{f1}ₘ₂, and
Z⁴ is a single bond, -O-, or a divalent organic group,
provided that in each of the formulae (S3), (S4) and (S5) at least two Si atoms to which OH or a hydrolyzable group is bonded are present;
X^{A} is a divalent group of the formula:
-(R⁵¹)ₚ₅-(X⁵¹)_{q5}-
wherein, each independently,
R⁵¹ is -(CH₂)ₛ₅-, or o-, m-, or p-phenylene,
s5 is an integer of 1-20,
X⁵¹ is -(X⁵²)₁₅-,
X⁵² is a group selected from -O-, -S-, o-, m-, or p-phenylene, -CO-, -C(O)O-, -CONR⁵⁴-, -O-CONR⁵⁴-, -NR⁵⁴-, and -(CH₂)ₙ₅-,
R⁵⁴ is H or a monovalent organic group,
n5 is an integer of 1-20,
l5 is an integer of 1-10,
p5 is 0 or 1, and
q5 is 0 or 1,
where at least one of p5 and q5 is 1, and the order of the repeating units in parentheses provided with p5 or q5 is not limited.

2. The compound of claim 1, wherein R² and R⁵, each independently at each occurrence,
- are C₁₋₁₈-alkyl or aryl optionally substituted with a halogen atom, and preferably
- are methyl or phenyl.

3. The compound of claim 1 or 2, wherein R³ each independently is C₁₋₁₂-alkylene or -R⁶-O-R⁶-.

4. The compound of any of claims 1-3, wherein R⁴ each independently
- is C₁₋₁₂-alkylene or -R⁶-O-R⁶-, or
- is -R⁸-R⁷-R⁸-, -R⁸-R⁷-R⁹-R⁷-R⁸⁻, -R⁸-R⁷-R⁹-R⁶-R⁹-R⁷-R⁸-, or -R⁹-R⁶-R⁹-R⁷-R⁹-R⁶-R⁹-.

5. The compound of any of claims 1-4, wherein X^{A} each independently is C₁₋₂₀-alkylene or -(CH₂)ₛ₅-CONH-(CH₂)ₜ₅-, wherein s5 is an integer of 1-20 and t5 is an integer of 1-20.

6. A surface-treating agent comprising the silane compound of any of claims 1-5.

7. A surface-treating agent comprising at least one of a silane compound of any of claims 1-5 and a compound composed of a condensed product in which at least a portion of the silane compound is condensed.

8. The use of the surface-treating agent of claim 6 or 7 for vacuum deposition or for wet coating.

9. A pellet comprising the surface-treating agent of claim 6 or 7.

10. An article comprising a substrate and, on the substrate, a layer formed of the compound of any of claims 1-9 or the surface-treating agent of claim 6 or 7.

11. The article of claim 10, which is an optical member, and preferably a display.

## Patentansprüche

1. Verbindung, die eine Silanverbindung der Formel (1) ist:
R¹-R^{S}-Si(R²)₂-X^{A}-_{R}^{H} (1)
worin, bei jedem Vorkommen unabhängig,
R^{S} ist eine Gruppe der Formel: 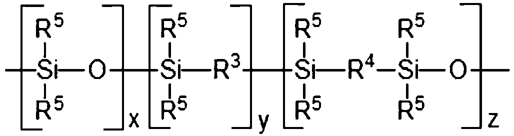
R³ ist C₁₋₁₂-Alkylen, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, oder -R⁹-R⁶-R⁹-R⁷-R⁹-R⁶-R⁹-,
R⁴ ist jeweils unabhängig eine C₁₋₁₂ Alkylengruppe, -R⁶-O-R⁶-, -R⁸-R⁻⁷-R⁸-, -R⁷R⁷-R⁷R⁷-R⁸, -R⁸-R⁷-R⁹-R⁶-R⁹-R⁷-R⁸-, oder -R⁹-R⁶-R⁹-R⁷-R⁹-R⁶-R⁹⁻,
R⁶ ist C₁₋₆-alkylene,
R⁷ ist optional substituiertes Arylen,
R⁸ ist eine Einfachbindung oder C₁₋₆-Alkylen,
R⁹ ist eine Einfachbindung oder -O-,
R⁵ ist eine Kohlenwasserstoffgruppe,
x ist eine ganze Zahl von 0 bis 200,
y ist eine ganze Zahl von 0 bis 200,
z eine ganze Zahl von 0 bis 200 ist,
wobei (y+z) ≥ 1 ist und die Reihenfolge der Wiederholungseinheiten in Klammern, die mit x, y oder z versehen sind, nicht beschränkt ist,
R¹ ist eine Kohlenwasserstoffgruppe,
R² ist eine Kohlenwasserstoffgruppe,
R^{H} ist eine beliebige Gruppe der Formeln (S1) und (S3)-(S5): 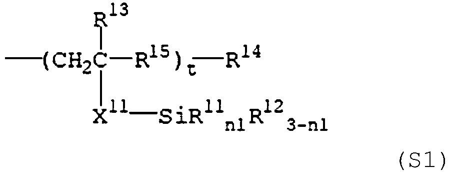
worin, jeweils unabhängig,
R¹¹ OH oder eine hydrolysierbare Gruppe ist,
R¹² eine einwertige organische Gruppe ist,
n1 für jede (SiR¹¹ₙ₁R¹²₃₋ₙ₁)-Einheit eine ganze Zahl von 0 bis 3 ist,
X¹¹ eine Einfachbindung oder eine zweiwertige organische Gruppe ist,
R¹³ H oder eine einwertige organische Gruppe ist,
t jeweils unabhängig eine ganze Zahl von ≥ 2 ist,
R¹⁴ H, Halogen oder -X¹¹-SiR¹¹ₙ₁R¹²₃₋ₙ₁ ist,
R¹⁵ eine Einfachbindung, -O-, C₁₋₆-Alkylen oder C₁₋₆-Alkylenoxy ist,
-SiR^{a1}ₖ₁R^{b1}ₗ₁R^{c1}ₘ₁ (S3)
worin, jeweils unabhängig,
R^{a1} -Z¹-Si_{R}²¹ₚ₁R²²_{q1}R²³ᵣ₁ ist,
Z¹ ist eine zweiwertige organische Gruppe,
R²¹ ist -Z^{1'}-SiR^{21'}_{p1'}R^{22'}_{q1'}R^{23'}_{r1'},
Z^{1'} ist eine zweiwertige organische Gruppe,
R^{21'} ist -Z^{1"}-Si^{R22"}_{q1"}R^{23"}_{r1"},
Z^{1"} ist eine zweiwertige organische Gruppe,
R^{22"} ist OH oder eine hydrolysierbare Gruppe,
R^{23"} ist eine einwertige organische Gruppe,
q^{1"} ist eine ganze Zahl von 0 bis 3,
r^{1"} ist eine ganze Zahl von 0 bis 3,
R^{22'} ist OH oder eine hydrolysierbare Gruppe,
R^{23'} ist eine einwertige organische Gruppe,
p^{1'} ist eine ganze Zahl von 0 bis 3,
q^{1'} ist eine ganze Zahl von 0 bis 3,
r^{1'} ist eine ganze Zahl von 0 bis 3,
R²² ist OH oder eine hydrolysierbare Gruppe,
R²³ ist eine einwertige organische Gruppe,
p1 ist eine ganze Zahl von 0 bis 3,
q1 ist eine ganze Zahl von 0 bis 3,
r1 ist eine ganze Zahl von 0 bis 3,
R^{b1} ist OH oder eine hydrolysierbare Gruppe,
R^{c1} ist eine einwertige organische Gruppe,
k1 ist eine ganze Zahl von 0 bis 3,
l1 ist eine ganze Zahl von 0 bis 3,
m1 ist eine ganze Zahl von 0 bis 3,
-CR^{d1}ₖ₂R^{e1}ₗ₂R^{cf}ₘ₂ (S4)
worin, jeweils unabhängig,
R^{d1} ist -Z²-CR³¹ₚ₂R³²_{q2}R³³ᵣ₂,
Z² ist eine Einfachbindung, -O- oder eine zweiwertige organische Gruppe,
R³¹ ist -Z^{2'}-CR^{32'}q_{2'}R^{33'}_{r2'},
Z^{2'} ist eine Einfachbindung, -O- oder eine zweiwertige organische Gruppe,
R^{32'} ist -Z³-SiR³⁴ₙ₂R³⁵₃₋ₙ₂,
Z³ ist eine Einfachbindung, -O- oder eine zweiwertige organische Gruppe,
R³⁴ ist OH oder eine hydrolysierbare Gruppe,
R³⁵ ist eine einwertige organische Gruppe,
n2 ist eine ganze Zahl von 0 bis 3,
R^{33'} ist H, OH oder eine einwertige organische Gruppe,
q²' ist eine ganze Zahl von 0 bis 3,
r²' ist eine ganze Zahl von 0 bis 3,
R³² ist -Z³-SiR³⁴ₙ₂R³⁵₃₋ₙ₂,
R³³ ist H, OH oder eine einwertige organische Gruppe,
p2 ist eine ganze Zahl von 0 bis 3,
q2 ist eine ganze Zahl von 0 bis 3,
r2 ist eine ganze Zahl von 0 bis 3,
R^{e1} ist -Z³-SiR³⁴ₙ2R³⁵₃₋ₙ₂,
R^{f1} ist H, OH oder eine einwertige organische Gruppe,
k2 ist eine ganze Zahl von 0 bis 3,
l2 ist eine ganze Zahl von 0 bis 3,
m2 ist eine ganze Zahl von 0 bis 3,
-NR^{g1}R^{h1} (S5)
worin R^{g1} und R^{h1} jeweils unabhängig -Z⁴-SiR¹¹ₙ₁R¹² ₃₋ₙ₁, -Z¹-SiR^{a1}ₖ₁R^{b1}ₗ₁R^{c1}ₘ₁, oder -Z⁴-CR^{d1}ₖ₂R^{e1}ₗ₂R^{f1}ₘ₂ sind, und
Z⁴ eine Einfachbindung, -O- oder eine zweiwertige organische Gruppe ist,
mit der Maßgabe, dass in jeder der Formeln (S3), (S4) und (S5) mindestens zwei Si-Atome, an die OH oder eine hydrolysierbare Gruppe gebunden ist, vorhanden sind;
X^{A} ist eine zweiwertige Gruppe der Formel:
-(R⁵¹)ₚ₅-(X⁵¹)_{q5}-
worin, jeweils unabhängig,
R⁵¹ ist -(CH₂)ₛ₅-, oder o-, m- oder p-Phenylen,
s5 ist eine ganze Zahl von 1 bis 20,
X⁵¹ ist -(X⁵²)₁₅-,
X⁵² ist eine Gruppe, ausgewählt aus -O-, -S-, o-, m- oder p-Phenylen, -CO-, -C(O)O-, -CONR⁵⁴-, -O-CONR⁵⁴-, -NR⁵⁴-und -(CH₂)ₙ₅-,
R⁵⁴ ist H oder eine einwertige organische Gruppe,
n5 ist eine ganze Zahl von 1 bis 20,
l5 ist eine ganze Zahl von 1 bis 10,
p5 ist 0 oder 1, und
q5 ist 0 oder 1,
wobei mindestens einer der Werte p5 und q5 gleich 1 ist und die Reihenfolge der Wiederholungseinheiten in den Klammern, die mit p5 oder q5 versehen sind, nicht beschränkt ist.

2. Verbindung nach Anspruch 1, wobei R² und R⁵ bei jedem Vorkommen jeweils unabhängig
- C₁₋₁₈-Alkyl oder Aryl, optional substituiert mit einem Halogenatom sind, und vorzugsweise
- Methyl oder Phenyl sind.

3. Verbindung nach Anspruch 1 oder 2, wobei R³ jeweils unabhängig C₁₋₁₂-Alkylen oder -R⁶-O-R⁶- ist.

4. Verbindung nach mindestens einem der Ansprüche 1 bis 3, wobei R⁴ jeweils unabhängig
- C₁₋₁₂-Alkylen oder -R⁶-O-R⁶- ist, oder
- -R⁸-R⁷-R⁸-, -R⁸-R⁷-R⁹-R⁷-R⁸-, -R⁸-R⁷-R⁹-R⁶-R⁹-R⁷-R⁸-, oder - R⁹-R⁶-R⁹-R⁷-R⁹-R⁶-R⁹- ist.

5. Verbindung nach mindestens einem der Ansprüche 1 bis 4, wobei X^{A} jeweils unabhängig C₁₋₂₀-Alkylen oder -(CH₂)ₛ₅-CONH-(CH₂)ₜ₅- ist, worin s5 eine ganze Zahl von 1 bis 20 und t5 eine ganze Zahl von 1 bis 20 ist.

6. Oberflächenbehandlungsmittel, das die Silanverbindung nach mindestens einem der Ansprüche 1 bis 5 umfasst.

7. Oberflächenbehandlungsmittel, umfassend mindestens eine Silanverbindung nach mindestens einem der Ansprüche 1 bis 5 und eine Verbindung, die aus einem Kondensationsprodukt aufgebaut ist, in dem mindestens ein Teil der Silanverbindung kondensiert ist.

8. Verwendung des Oberflächenbehandlungsmittels nach Anspruch 6 oder 7 zur Vakuumabscheidung oder zur Nassbeschichtung.

9. Pellet, das das Oberflächenbehandlungsmittel nach Anspruch 6 oder 7 umfasst.

10. Artikel, umfassend ein Substrat und auf dem Substrat eine Schicht, die aus der Verbindung nach mindestens einem der Ansprüche 1 bis 9 oder dem Oberflächenbehandlungsmittel nach Anspruch 6 oder 7 gebildet ist.

11. Artikel nach Anspruch 10, der ein optisches Bauteil, und vorzugsweise ein Display, ist.

## Revendications

1. Composé qui est un composé silanique de formule (1) :
R¹-R^{S}-Si(R²)₂-X^{A}-R^{H} (1)
dans laquelle, chacun indépendamment à chaque occurence,
R^{s} est un groupe de formule : 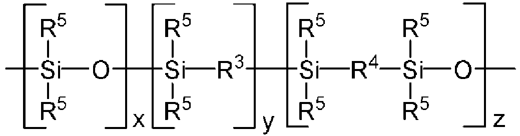
R³ est un C₁₋₁₂-alkylène, -R⁸-O-R⁸-, -R⁸-R⁷-R⁸-, -R⁸-R⁷-R⁹-R⁷-R⁸⁻, -R⁸-R⁷-R⁹-R⁶-R⁹-R⁷-R⁸-, ou -R⁹-R⁶-R⁹-R⁷-R⁹-R⁶-R⁹-,
R⁴ est, chacun indépendamment, un groupe C₁₋₁₂-alkylène, -R⁸-O-R⁸-, -R⁸-R⁷-R⁸-, -R⁸-R⁷-R⁹-R⁷-R⁸⁻, -R⁸-R⁷-R⁹-R⁶-R⁹-R⁷-R⁸-, ou -R⁹-R⁶-R⁹-R⁷-R⁹-R⁶-R⁹-,
R⁶ est un C₁₋₆-alkylène,
R⁷ est un arylène facultativement substitué,
R⁸ est une liaison simple ou un C₁₋₆-alkylène,
R⁹ est une liaison simple ou -O-,
R⁵ est un groupe hydrocarboné,
x est un nombre entier de 0 à 200,
y est un nombre entier de 0 à 200,
z est un nombre entier de 0 à 200,
dans lequel (y+z) est ≥ 1, et l'ordre des unités répétitives entre parenthèses, munies de x, y ou z, n'est pas limité,
R¹ est un groupe hydrocarboné,
R² est un groupe hydrocarboné,
R^{H} est un groupe de l'une quelconque des formules (S1) et (S3) à (S5) : 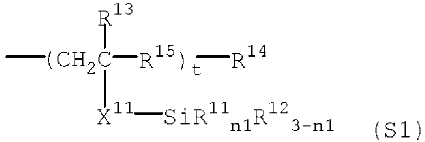
dans lequel, chacun indépendamment
R¹¹ est OH ou un groupe hydrolysable,
R¹² est un groupe organique monovalent,
n1 est un nombre entier de 0 à 3 pour chaque unité (SiR¹¹ₙ₁R¹²₃₋ₙ₁), X¹¹ est une liaison simple ou un groupe organique divalent,
R¹³ est H ou un groupe organique monovalent,
t est chacun indépendamment un nombre entier ≥ 2,
R¹⁴ est H, un halogène, ou -X¹¹-SiR¹¹ₙ₁R¹²₃₋ₙ₁,
R¹⁵ est une liaison simple, -O-, un C₁₋₆-alkylène ou un C₁₋₆-alkylèneoxy,
-SiR^{a1}ₖ₁R^{b1}₁₁R^{c1}ₘ₁ (S3)
dans lequel, chacun indépendamment
R^{a1} est -Z¹-SiR²¹ₚ₁R²²_{q1}R²³ᵣ₁,
Z¹ est un groupe organique divalent,
R²¹ est -Z¹'-SiR²¹'ₚ₁'R²²'_{q1}'R²³'ᵣ₁',
Z¹' est un groupe organique divalent,
R²¹' est -Z^{1'}'-SiR^{22"}_{q1"}R^{23"}_{r1"},
Z^{1"} est un groupe organique divalent,
R^{22"} est OH ou un groupe hydrolysable,
R^{23"} est un groupe organique monovalent,
q1" est un nombre entier de 0 à 3,
r1" est un nombre entier de 0 à 3,
R²²' est OH ou un groupe hydrolysable,
R²³' est un groupe organique monovalent,
p1' est un nombre entier de 0 à 3,
q1' est un nombre entier de 0 à 3,
r1' est un nombre entier de 0 à 3,
R²² est OH ou un groupe hydrolysable,
R²³ est un groupe organique monovalent,
p1 est un nombre entier de 0 à 3,
q1 est un nombre entier de 0 à 3,
r1 est un nombre entier de 0 à 3,
R^{b1} est OH ou un groupe hydrolysable,
R^{c1} est un groupe organique monovalent,
k1 est un nombre entier de 0 à 3,
l1 est un nombre entier de 0 à 3,
m1 est un nombre entier de 0 à 3,
-CR^{d1}ₖ₂R^{e1}₁₂R^{cf}ₘ₂ (S4)
dans lequel, chacun indépendamment,
R^{d1} est -Z²-CR³¹ₚ₂R³²_{q2}R³³ᵣ₂,
Z² est une liaison simple, -O-, ou un groupe organique divalent,
R³¹ est -Z²'-CR³²'_{q2}'R³³'_{r2'},
Z²' est une liaison simple, -O-, ou un groupe organique divalent,
R³²' est -Z³-SiR³⁴ₙ₂R³⁵₃₋ₙ₂,
Z³ est une liaison simple, -O-, ou un groupe organique divalent,
R³⁴ est OH ou un groupe hydrolysable,
R³⁵ est un groupe organique monovalent,
n2 est un nombre entier de 0 à 3,
R³³' est H, OH, ou un groupe organique monovalent,
q2' est un nombre entier de 0 à 3,
r2' est un nombre entier de 0 à 3,
R³² est -Z³-SiR³⁴ₙ₂R³⁵₃₋ₙ₂,
R³³ est H, OH, ou un groupe organique monovalent,
p2 est un nombre entier de 0 à 3,
q2 est un nombre entier de 0 à 3,
r2 est un nombre entier de 0 à 3,
R^{e1} est -Z³-SiR³⁴ₙ₂R³⁵₃₋ₙ₂,
R^{f1} est H, OH, ou un groupe organique monovalent,
k2 est un nombre entier de 0 à 3,
l2 est un nombre entier de 0 à 3,
m2 est un nombre entier de 0 à 3,
-NR^{g1}R^{h1} (S5)
dans lequel R^{g1} et R^{h1} sont chacun indépendamment -Z⁴-,
SiR¹¹ₙ₁R¹²₃₋ₙ₁, -Z⁴-SiR^{a1}ₖ₁R^{b1}ₗ₁R^{c1}ₘ₁, ou -Z⁴-CR^{d1}ₖ₂R^{e1}ₗ₂R^{f1}ₘ₂, et
Z⁴ est une liaison simple, -O-, ou un groupe organique divalent,
à condition que dans chacune des formules (S3), (S4) et (S5), au moins
deux atomes de Si auxquels OH ou un groupe hydrolysable est lié soient présents ;
X^{A} est un groupe divalent de formule :
-(R⁵¹)ₚ₅-(X⁵¹)_{q5}-
dans lequel, chacun indépendamment,
R⁵¹ est -(CH₂)ₛ₅-, ou o-, m-, ou p-phénylène,
s5 est un nombre entier de 1 à 20,
X⁵¹ est -(X⁵²)₁₅-,
X⁵² est un groupe sélectionné parmi -O-, -S-, o-, m-, ou
p-phénylène, -CO-, -C(O)O-, -CONR⁵⁴-, -O-
CONR⁵⁴-, -NR⁵⁴-, et -(CH₂)ₙ₅-,
R⁵⁴ est H ou un groupe organique monovalent,
n5 est un nombre entier de 1 à 20,
l5 est un nombre entier de 1 à 10,
p5 est 0 ou 1, et
q5 est 0 ou 1,
où au moins un de p5 et q5 est 1, et l'ordre des unités répétitives entre parenthèses munies de p5 ou q5 n'est pas limité.

2. Composé selon la revendication 1, dans lequel R² et R⁵, chacun indépendamment à chaque occurrence,
- sont des C₁₋₁₈-alkyle ou aryle facultativement substitués par un atome d'halogène, et de préférence
- sont méthyl ou phényle.

3. Composé selon la revendication 1 ou la revendication 2, dans lequel R³ est, chacun indépendamment, un C₁₋₁₂-alkylène ou -R⁸-O-R⁸-.

4. Composé selon l'une quelconque des revendications 1 à 3, dans lequel R⁴ est, chacun indépendamment,
- un C₁₋₁₂-alkylène ou -R⁸-O-R⁸-, ou
- R⁸-R⁷-R⁸-, -R⁸-R⁷-R⁹-R⁷-R⁸-, -R⁸-R⁷-R⁹-R⁶-R⁹-R⁷-R⁸-, ou -R⁹-R⁶-R⁹-R⁷-R⁹-R⁶-R⁹-.

5. Composé selon l'une quelconque des revendications 1 à 4, dans lequel X^{A} est, chacun indépendamment, un C₁₋₂₀-alkylène ou -(CH₂)ₛ₅-CONH-(CH₂)ₜ₅-, dans lequel s5 est un nombre entier de 1 à 20 et t5 est un nombre entier de 1 à 20.

6. Agent de traitement de surface comprenant le composé silanique selon l'une quelconque des revendications 1 à 5.

7. Agent de traitement de surface comprenant au moins un parmi un composé silanique selon l'une quelconque des revendications 1 à 5 et un composé constitué d'un produit condensé dans lequel au moins une partie du composé silanique est condensée.

8. Utilisation de l'agent de traitement de surface selon la revendication 6 ou la revendication 7 pour un dépôt sous vide ou pour un revêtement par voie humide.

9. Pastille comprenant l'agent de traitement de surface selon la revendication 6 ou la revendication 7.

10. Article comprenant un substrat et, sur le substrat, une couche formée du composé selon l'une quelconque des revendications 1 à 9 ou de l'agent de traitement de surface selon la revendication 6 ou la revendication 7.

11. Article selon la revendication 10, qui est un élément optique, et de préférence un écran.
